# EUROPÄISCHE PATENTSCHRIFT

(11) **EP 4 140 654 B1**
(45) Veröffentlichungstag und Bekanntmachung des Hinweises auf die Patenterteilung: **15.01.2025**
(21) Anmeldenummer: 21290053.4
(22) Anmeldetag: 31.08.2021
(51) Int. Cl.: B25F 5/00

(54) **KRYPTOGRAPHISCH KOMMUNIZIERFÄHIGES TOKEN ZUM MECHANISCHEN KOPPELN UND KOMMUNIZIEREN MIT HANDGERÄTEN**
CRYPTOGRAPHICALLY COMMUNICATING TOKEN FOR MECHANICAL COUPLING AND COMMUNICATING WITH HAND-HELD DEVICES
JETON APTE À LA COMMUNICATION CRYPTOGRAPHIQUE PERMETTANT D'ACCOUPLER MÉCANIQUEMENT ET DE COMMUNIQUER AVEC DES APPAREILS PORTATIFS

(43) Veröffentlichungstag der Anmeldung: 01.03.2023
(73) Patentinhaber: Adolf Würth GmbH & Co. KG, 74653 Künzelsau (DE); Würth International AG, 7000 Chur (CH)
(72) Erfinder: Rosskamp, Heiko, 73099 Adelberg (DE); Marquette, Adrien, 74523 Schwäbisch Hall (DE); Aschoff, Louisa, 74632 Neuenstein (DE)
(74) Vertreter: Dilg, Andreas

(56) Entgegenhaltungen:
- EP-A1- 1 720 122
- WO-A1-2006/021047
- US-A1- 2017 177 894

## Beschreibung

Die Erfindung betrifft einen Token für Handwerkergeräte einer Handwerkerausstattung, eine Token-Anordnung, eine Handwerkerausstattung, und ein Verfahren zum Betreiben von Handwerkergeräten einer Handwerkerausstattung mittels eines Token.

Herkömmliche Handgeräte werden von einem Benutzer direkt gesteuert. Beispielsweise wird eine Bohrmaschine dadurch gesteuert, dass ein Benutzer einen geeigneten Bohrer in die Bohrmaschine einsetzt und dann eine Betätigungstaste der Bohrmaschine betätigt. Wenn ein Benutzer ohne Spezialkenntnisse mittels eines solchen Handgeräts eine delikate Handwerkaufgabe ausführt, kann es zu einer Fehlbedienung, einem unerwünschten Ergebnis und einer Gefährdung der Betriebssicherheit kommen.

DE 10258900 A1 offenbart einen Akkuschrauber zum Festschrauben von Schraubkomponenten, mit einem Schraubermotor, der von einer autarken, am Akkuschrauber angeordneten Spannungsversorgung mit elektrischer Spannung versorgt wird, mindestens drei Messeinrichtungen, die zum Überwachen von Schraubparametern während des Einschraubvorgangs vorgesehen sind, nämlich einem Drehmomentsensor, mit dem das vom Schraubermotor erzeugte Anzugsdrehmoment messbar ist, einem Drehwinkelsensor, mit dem, ausgehend von einer vorgegebenen Messstellung, der aktuelle Einschraubwinkel messbar ist, und einem Stromsensor, mit dem der Antriebsstrom des Schraubermotors messbar ist. Ferner ist eine Überwachungselektronik vorgesehen, welche den Schraubermotor abschaltet, wenn gleichzeitig das Anzugsdrehmoment, der Einschraubwinkel und der Antriebsstrom jeweils innerhalb eines vorgegebenen, zugeordneten Soll-Parameter-Fensters liegen. WO2006/021047 offenbart ein Token für Handwerkgeräte nach dem Oberbegriff des Anspruchs 1.

Insbesondere bei schwierigen oder unüblichen Bearbeitungsaufgaben mittels eines Handgeräts geraten herkömmliche Handgeräte an ihre Grenzen.

Es ist eine Aufgabe der vorliegenden Erfindung, einen Betrieb eines Handgeräts in einfacher, sicherer und fehlerrobuster Weise zu ermöglichen.

Diese Aufgabe wird durch die Gegenstände mit den Merkmalen gemäß den unabhängigen Patentansprüchen gelöst. Weitere Ausführungsbeispiele sind in den abhängigen Ansprüchen gezeigt.

Gemäß einem Ausführungsbeispiel der vorliegenden Erfindung ist ein Token für Handwerkergeräte (insbesondere zum Steuern von Handwerkergeräten) einer Handwerkerausstattung geschaffen, wobei der Token einen Prozessor, der zum, insbesondere steuerungstechnischen, Zusammenwirken mit unterschiedlichen Handwerkergeräten der Handwerkerausstattung ausgebildet ist, eine Kryptographieeinheit, die zum kryptografischen Kommunizieren des Token ausgebildet ist, indem sie Signale verschlüsselt und/oder entschlüsselt, und eine mechanische Kopplungseinrichtung aufweist, die zum mechanischen Koppeln mit unterschiedlichen Handwerkergeräten der Handwerkerausstattung ausgebildet ist, wobei der Token ausgebildet ist, bei mechanischem Koppeln der mechanischen Kopplungseinrichtung mit einem Handwerkergerät mittels des Prozessors mit dem besagten Handwerkergerät Daten auszutauschen, und insbesondere das besagte Handwerkergerät zu steuern.

Gemäß einem weiteren Ausführungsbeispiel der vorliegenden Erfindung ist eine Token-Anordnung bereitgestellt, die eine Mehrzahl von Token mit den oben beschriebenen Merkmalen aufweist, wobei unterschiedliche der Token unterschiedliche Grade an Funktionalität aufweisen.

Gemäß einem weiteren Ausführungsbeispiel der Erfindung ist eine Handwerkerausstattung bereitgestellt, die einen Token mit den oben beschriebenen Merkmalen und eine Mehrzahl von Handwerkergeräten aufweist, von denen zumindest einige eine mechanische Aufnahmeeinrichtung zum mechanischen Koppeln mit der mechanischen Kopplungseinrichtung des Token aufweisen, wobei der Token zum benutzerbezogenen Datenaustausch mit, insbesondere Steuern von, demjenigen der Handwerkergeräte ausgebildet ist, mit dessen mechanischer Aufnahmeeinrichtung die mechanische Kopplungseinrichtung des Token mechanisch gekoppelt ist.

Gemäß einem weiteren Ausführungsbeispiel der Erfindung ist ein Verfahren zum Betreiben von Handwerkergeräten einer Handwerkerausstattung mittels eines Token mit den oben beschriebenen Merkmalen bereitgestellt, wobei das Verfahren ein mechanisches Koppeln der mechanischen Kopplungseinrichtung des Token mit einer mechanischen Aufnahmeeinrichtung von einem ausgewählten der Handwerkergeräte, und, nach erfolgtem mechanischen Koppeln, ein Austauschen von Daten mit dem besagten Handwerkergerät, und insbesondere ein Steuern des Handwerkergeräts, mittels des Prozessors aufweist.

Im Rahmen der vorliegenden Anmeldung kann unter einem "Token" insbesondere eine Erkennungsmarke verstanden werden, die eine Funktionskopplung zwischen dem Token und einem Handwerkergerät ausbilden kann. Eine solche Erkennungsmarke kann in einem gekoppelten System zum Einsatz kommen, welches den Token, ein damit mechanisch gekoppeltes Handwerkergerät und optional ein oder weitere Geräte oder Knoten umfassen kann. Insbesondere kann ein Token eine Hardwarekomponente zur Identifizierung und/oder Authentifizierung eines Benutzers sein, dem der Token zugeordnet sein kann. Ein Token kann ein elektronischer Token sein und zum Beispiel eine prozessorbezogene Steuer-, Überwachungs- und/oder Kommunikationsfunktion bereitstellen.

Im Rahmen der vorliegenden Anmeldung kann unter einem "Handwerkergerät" insbesondere eine Vorrichtung verstanden werden, die von einem Handwerker während einer handwerklichen Tätigkeit genutzt wird. Hierbei kann es sich insbesondere um ein elektrisches Handgerät (wie zum Beispiel ein Akku-Schrauber), ein (insbesondere nichtelektrisches) Werkzeug (zum Beispiel ein Hammer, eine Zange, eine Feile, ein Schraubendreher oder ein Bohrer) oder einen Werkzeugsatz mit mehreren Werkzeugen oder Werkzeugelementen (zum Beispiel eine Bohrerbox mit Bohrern oder eine Bitbox mit Bits), ein Bevorratungssystem (zum Beispiel ein Werkzeugkoffer), Verbrauchsgut (zum Beispiel Bolzenanker oder eine Schachtel mit Schrauben), und/oder ein Fahrzeug (zum Beispiel ein Kraftfahrzeug, in dem ein Handwerker seine Ausrüstung zu einem Einsatzort verbringen kann, ein Gabelstapler oder ein Werkzeugwagen) und/oder um eine sonstige Handwerker-Gerätschaft (zum Beispiel eine Leiter) handeln. Ein Handwerkergerät kann auch ein Akku-Block oder ein Adapter zwischen einem Akku-Block und einer Bearbeitungseinrichtung (zum Beispiel einem Bohr-Modul einer Bohrmaschine) sein. Beispielsweise kann ein Token in einen solchen Akku-Block oder einen solchen Adapter eingesteckt werden.

Im Rahmen der vorliegenden Anmeldung kann unter einem "Handgerät" insbesondere eine portable Vorrichtung verstanden werden, die von einem Benutzer händisch betätigt und getragen werden kann und mit dem eine Handwerkeraufgabe erledigt werden kann, zum Beispiel eine Bearbeitung eines Untergrunds. Vorteilhaft kann es sich bei dem Handgerät um ein elektrisches Handgerät handeln, das mittels einer elektrisch erzeugten Antriebskraft betrieben werden kann. Ein solches elektrisches Handgerät kann mittels elektrischer Steuersignale - insbesondere bereitgestellt mittels eines Token - gesteuert werden. Insbesondere kann mittels eines Handgeräts und durch Aufbringen einer Antriebskraft in Form einer Längskraft und/oder eines Drehmoments ein Loch in einem Untergrund gebohrt werden und/oder kann eine Antriebskraft in Form einer Längskraft und/oder eines Drehmoments auf ein in einem Untergrund zu setzendes Befestigungselement aufgebracht werden. Zum Beispiel kann das Handgerät zum Drehantreiben einer Bearbeitungseinrichtung und somit eines Bohrers und/oder eines Befestigungselements ausgebildet sein. Beispiele für elektrische oder motorische Handgeräte sind ein Akkuschrauber, ein Akku-Bohrschrauber, ein Drehschrauber, ein Impulsschrauber, ein Ratschenschrauber, eine Bohrmaschine, ein Schlagschrauber (insbesondere ein Akku-Schlagschrauber) und ein Hammerbohrer.

Im Rahmen der vorliegenden Anmeldung kann unter einer "Handwerkerausstattung" insbesondere ein Satz mit einer Vielzahl von Handwerkergeräten verstanden werden, die ein Handwerker zur Erledigung von Handwerksaufgaben in Kombination verwendet. Beispielsweise kann eine Handwerkerausstattung mindestens zehn, insbesondere mindestens hundert, Handwerkergeräte beinhalten.

Im Rahmen dieser Anmeldung kann unter dem Begriff "Prozessor" insbesondere eine elektronische Entität verstanden werden, die ein Rechenwerk und/oder ein Steuerwerk enthalten kann und/oder zur Datenverarbeitung ausgebildet sein kann. Insbesondere kann ein solcher Prozessor auf ein mit dem Token mechanisch gekoppeltes Handwerkergerät steuernd einwirken und dadurch einen Betrieb oder eine Betriebsweise des Handwerkergeräts (insbesondere ein Handgerät) einstellen. Insbesondere kann der Prozessor die Einstellung des Betriebs bzw. der Betriebsweise des Handwerkergeräts oder eines Teils davon steuern, insbesondere basierend auf einem Benutzerprofil eines Benutzers des Token. Die Steuerlogik zwischen Token und Handwerkergerät und/oder zwischen Token und einem anderen Knoten (insbesondere einem weiteren Knoten oder einer zentralen Steuereinrichtung) kann zum Beispiel entsprechend einer Master-Slave-Architektur oder entsprechend einer Peer-to-Peer-Architektur erfolgen. Der Prozessor des Token kann alternativ oder ergänzend andere Funktionen übernehmen, zum Beispiel Sensorsignale eines Sensors des Token auswerten, eine Kommunikation mit einem anderen Knoten über ein Kommunikationsnetzwerks steuern, etc. Ein Prozessor kann zum Beispiel durch ein Prozessor-Bauteil, eine Mehrzahl von Prozessor-Bauteilen oder einen Teil eines Prozessor-Bauteils realisiert sein.

Im Rahmen der vorliegenden Anmeldung kann unter einer "Kryptographieeinheit" insbesondere eine Entität (insbesondere eine eigene Hardwarekomponente oder ein Teil einer anderen Hardwarekomponente, zum Beispiel eines Prozessors) verstanden werden, die eine verschlüsselte Kommunikation zwischen dem Token und einem hiermit kommunizierfähig gekoppelten Knoten (zum Beispiel ein mit dem Token mechanisch gekoppeltes Handwerkergerät und/oder ein anderer Knoten eines Kommunikationsnetzwerks, in dem der Token kommunizierfähig gekoppelt ist) bewerkstelligt. Zum Beispiel kann eine Kryptographieeinheit eine Crypto-Engine eines Computerchips sein.

Die Kryptographieeinheit kann (insbesondere elektrische oder elektromagnetische) Signale verschlüsseln und/oder entschlüsseln. Eine kryptografische Kommunikation eines Token mit einem oder mehreren Handwerkergeräten und/oder anderen Knoten kann beispielsweise auf der Verwendung von Schlüsseln und/oder Verschlüsselungsalgorithmen beruhen. Die Kryptographieeinheit kann daher zum verschlüsselten Kommunizieren des Token mit einem damit mechanisch gekoppelten Handwerkergerät und/oder mit einer anderen Entität über ein Kommunikationsnetzwerk dienen, wie beispielsweise das öffentliche Internet. Dieses verschlüsselte Kommunikation erhöht die Datensicherheit.

Im Rahmen der vorliegenden Anmeldung kann unter einer "mechanischen Kopplungseinrichtung" insbesondere eine physische Struktur oder ein Formfaktor des Token verstanden werden, die bzw. der zum Beispiel formschlüssig und/oder reibschlüssig mit einer korrespondierenden physischen Struktur eines Handwerkergeräts gekoppelt werden kann, um dadurch eine insbesondere vorübergehende und wohldefinierte mechanische Verbindung zwischen Token und Handwerkergerät auszubilden. Beispielsweise kann der Token in eine entsprechend geformte Aufnahmeöffnung des Handwerkergeräts eingeführt werden, um Token und Handwerkergerät mechanisch zu koppeln. Hierbei kann die mechanische Kopplungseinrichtung ausgebildet sein, durch bloßes Ausbilden einer mechanischen Kopplung mit einem Handwerkergerät simultan eine kommunizierfähige Kopplung zwischen Token und Handgerät herzustellen.

Im Rahmen der vorliegenden Anmeldung kann unter "unterschiedlichen Graden an Funktionalität" von Token einer Token-Anordnung insbesondere verstanden werden, dass unterschiedliche Token der Token-Anordnung alle jeweils eine bestimmte Funktionsart ermöglichen (zum Beispiel eine Prozessorfunktion, eine Sensorfunktion und/oder eine Kommunikationsfunktion), allerdings in unterschiedlicher Ausprägung, Intensität und/oder Diversität. Zum Beispiel kann, was eine Sensor-Funktionalität betrifft, ein Token eines geringeren Grades an Funktionalität einen Benutzeridentifizierungssensor aufweisen, ein Token eines höheren Grades an Funktionalität zusätzlich noch einen GPS-Sensor aufweisen.

Gemäß einem exemplarischen Ausführungsbeispiel der Erfindung wird ein universell einsetzbarer Token zum wahlweisen Kommunizieren mit und gegebenenfalls Steuern von einem jeweiligen von einer Mehrzahl von Handwerkergeräten einer Handwerkerausstattung bereitgestellt, wobei durch mechanisches Koppeln des Token mit einem bestimmten Handwerkergerät eine Kommunikationsverbindung zwischen dem Token und dem besagten Handwerkergerät ausgebildet wird, was den Datenaustausch bzw. die Steuerung ermöglicht. Somit kann ein Benutzer durch bloßes Ausführen des intuitiven Vorgangs des mechanischen Koppelns des Token mit einem ausgewählten Handwerkergerät (zum Beispiel durch Einschieben des Token in eine Aufnahmeöffnung des Handwerkergeräts) eine Zuordnung des Token zu dem zu steuernden Handwerkergerät vornehmen, mehr Benutzeraktivität ist zum Zuordnen und kommunizierfähigen bzw. steuerfähigen Koppeln von Token und Handwerkergerät nicht erforderlich. Durch eine vorzugsweise verschlüsselte und daher sichere Kommunikation zwischen dem Token und dem damit mechanisch gekoppelten Handwerkergerät ist nach Ausbilden der mechanischen Kopplung eine zuverlässige Datenkommunikation bzw. Steuerung ermöglicht. Die Betriebssicherheit kann ferner dadurch erhöht werden, dass zum Ausbilden einer (insbesondere unidirektionalen oder bidirektionalen) Datenaustauschkopplung oder Steuerkopplung zwischen Token und Handwerkergerät eine gezielte mechanische Verbindung zwischen Token und Handwerkergerät herzustellen ist. Ein Besitzer eines (vorzugsweise benutzerbezogenen) Token kann somit genau definieren, welches Handwerkergerät mit dem Token Daten austauschen soll oder gesteuert werden soll. Vorteilhaft kann ein Token als universeller elektronischer Schlüssel wahlweise in jedes Handwerkergerät (zum Beispiel eine Bohrmaschine, eine Leiter, ein Bevorratungsregal oder einen Gabelstapler) einer Handwerkerausstattung (beispielsweise eines Maschinenparks) eingesetzt werden, um eine Zugangs- und/oder Betriebssteuerung dieses Handwerkergeräts oder einen gezielten Datenaustausch mit diesem Handwerkergerät durchzuführen. Mittels eines Token gemäß einem exemplarischen Ausführungsbeispiel der Erfindung ist es auch möglich, ein herkömmliches Handwerkergerät zum Bereitstellen einer Internet-Connectivity nachzurüsten.

Im Weiteren werden zusätzliche exemplarische Ausführungsbeispiele des Token, der Token-Anordnung, der Handwerkerausstattung und des Verfahrens beschrieben.

Gemäß einem exemplarischen Ausführungsbeispiel kann der Token als Steckelement zum Einstecken in eine Aufnahmeöffnung eines Handwerkergeräts ausgebildet sein. Der Prozess des Einsteckens des als Steckelement ausgebildeten Token in die Aufnahmeöffnung eines dadurch ausgewählten Handwerkergeräts löst dann erst in intuitiver Weise die Ausbildung einer steuerfähigen Verbindung zwischen Token und Handwerkergerät aus. Zum Beispiel kann eine Geometrie des als Steckelement ausgebildeten Token invers zu einer Geometrie der Aufnahmeöffnung in dem Handwerkergerät sein. Dann kann eine Verbindung zwischen Token und Handwerkergerät gemäß einem Schlüssel-Schloss-Prinzip ausgebildet werden, um eine kommunizierfähige Kopplung herzustellen. Durch das Einstecken eines Token in eine Aufnahmeöffnung eines Handwerkergeräts kann der Token während des Betriebs des Handwerkergeräts vor Einflüssen aus der Umgebung geschützt werden. Beispielsweise kann ein Token in einer Aufnahmeöffnung eines als Bohrmaschine ausgebildeten Handwerkergeräts vor einem während des Betriebs der Bohrmaschine freigesetzten Bohrmehl geschützt werden.

Gemäß einem exemplarischen Ausführungsbeispiel kann der Token als Scheibe, insbesondere als Kreisscheibe, mit einem Durchmesser in einem Bereich von 1 cm bis 10 cm ausgebildet sein, insbesondere in einem Bereich von 2 cm bis 5 cm. Es ist auch möglich, dass der Token als Quader (insbesondere als Flachquader) mit einer Kantenlänge in einem Bereich von 1 cm bis 10 cm ausgebildet ist, insbesondere in einem Bereich von 2 cm bis 5 cm. Ein als kleine Scheibe ausgebildeter Token lässt sich von einem Benutzer bequem mitführen und erlaubt die Ausbildung einer mechanischen Kopplung mit einem Handwerkergerät in platzsparender Weise. Außerdem erlaubt das Ausbilden des Token als Kreisscheibe mit den genannten Dimensionen die Implementierung eines einen Benutzer des Token identifizierenden Sensors, insbesondere eines Fingerprintsensors, an einer Oberfläche des Token. Für einen Benutzer kann es zur Selbstidentifizierung, die eine Voraussetzung für das Ausbilden einer steuerfähigen Kopplung zwischen Token und Handwerkergerät sein kann, ausreichen, sich durch Auflegen eines Fingers auf den Fingerprintsensor zu identifizieren. Nach erfolgter Identifizierung kann dann in dem Token eine Berechtigung des identifizierten Benutzers zum Steuern des mit dem Token gekoppelten Handwerkergeräts überprüft werden. Nach erfolgreicher Überprüfung kann die Steuerung begonnen werden, bei erfolgloser Überprüfung kann die Steuerung unterbunden werden.

Gemäß einem exemplarischen Ausführungsbeispiel kann die mechanische Kopplungseinrichtung ausgebildet sein, den Token von dem Handwerkergerät nach dem mechanischen Koppeln wieder abnehmen zu können. Auf diese Weise kann ein Benutzer, der ein Handwerkergerät benutzen möchte, einen ihm zugeordneten Token mit dem Handwerkergerät mechanisch koppeln und nach Beendigung der Benutzung den Token wieder von dem Handwerkergerät abnehmen. Das Handwerkergerät kann ausgebildet sein, nur während Bestehens einer mechanischen Kopplung mit einem Token eine Steuerung des Handwerkergeräts durch den Token oder sogar eine Benutzung des Handwerkergeräts zuzulassen.

Gemäß einem exemplarischen Ausführungsbeispiel kann die mechanische Kopplungseinrichtung eine elektromechanische Schnittstelle aufweisen, insbesondere eine für unterschiedliche Handwerkergeräte universelle elektromechanische Schnittstelle. Unter einer elektromechanischen Schnittstelle kann hierbei verstanden werden, dass das Ausbilden einer mechanischen Verbindung zwischen der mechanischen Kopplungseinrichtung des Token und einer korrespondierenden mechanischen Aufnahme- oder Verbindungseinrichtung des Handwerkergerätes simultan zum Ausbilden einer elektrischen Kopplung zwischen Token und Handwerkergerät führt. Dann kann mit einem beispielsweise formschlüssigen Koppeln von Token und Handwerkergerät auch eine Übermittlung eines elektrischen Steuersignals von einem elektrischen Kontakt des Token zu einem elektrischen Kontakt des Handwerkergeräts ermöglicht werden. Eine solche Handwerkerausstattung ist besonders fehlerrobust im Betrieb.

Gemäß einem exemplarischen Ausführungsbeispiel kann der Token ausgebildet sein, bei mechanischem Koppeln der mechanischen Kopplungseinrichtung mit einem Handwerkergerät eine Kommunikationsverbindung, insbesondere eine kontaktlose oder kontaktbehaftete Kommunikationsverbindung, mit dem Handwerkergerät auszubilden. Bezugnehmend auf das vorangehend beschriebene Ausführungsbeispiel betreffend eine elektromechanische Kopplung zwischen Token und Handwerkergerät kann eine kontaktbehaftete elektrische Kommunikation zwischen Token und Handwerkergerät bevorzugt erst mit dem Ausbilden der mechanischen Verbindung ermöglicht werden. Dies ermöglicht einem Benutzer, die Steuerungshoheit durch einen intuitiven Verbindungsprozess zu behalten. Alternativ kann erst durch das Ausbilden einer mechanischen Kopplung zwischen dem Token und dem Handwerkergerät eine kontaktlose Kommunikationsverbindung zwischen Token und Handwerkergerät ausgebildet werden. Zum Beispiel kann erst durch Einführen des Token in das Handwerkergerät ein drahtloser Transponder (zum Beispiel ein RFID-Tag) des Token in einen Lesbarkeitsabstand eines Transponder-Lesegeräts (zum Beispiel ein RFID-Lesegerät) des Handwerkergeräts gebracht werden. Dies kann beispielsweise durch Verwenden eines kurzreichweitigen Kommunikationsprotokolls (zum Beispiel NFC, near field communication) für die drahtlose Kommunikation zwischen Token und Handwerkergerät erreicht werden.

Gemäß einem exemplarischen Ausführungsbeispiel kann der Token mindestens einen Sensor aufweisen, insbesondere ausgewählt aus einer Gruppe bestehend aus einem Benutzeridentifizierungssensor, einem Gyrosensor, einem Ortsbestimmungssensor, einem Temperatursensor, einem Schalldrucksensor, einem Vibrationssensor, einem Beschleunigungssensor, einem Lagesensor, einem Stromsensor, einem Spannungssensor, und einem Sensor zum Messen eines elektrischen und/oder magnetischen Feldes. Besonders vorteilhaft kann der Token mit einem Benutzeridentifizierungssensor ausgestattet sein, zum Beispiel einem Fingerprintsensor oder einem Gesichtserkennungssensor. Bei Ausgestaltung als Fingerprintsensor braucht ein Benutzer lediglich einen Finger auf den Token zu legen, um sich zu identifizieren. Nach Ausbilden einer mechanischen Kopplung des Token mit einem Handwerkergerät kann dann anhand der sensorisch erkannten Identität des Benutzers ermittelt werden, ob der Benutzer zum Betrieb des Handwerkergeräts befähigt oder berechtigt ist, und falls ja, ob die Benutzung des Handwerkergeräts durch den Benutzer bestimmten Einschränkungen oder Besonderheiten unterliegt. Die beschriebene benutzerbezogene Einstellung des Betriebs des Handwerkergeräts kann vorteilhaft auf Basis eines Benutzerprofils des sensorisch identifizierten Benutzers erfolgen, das zum Beispiel in dem Token gespeichert sein kann oder von dem Token über ein Kommunikationsnetzwerk abrufbar sein kann. Alternativ oder ergänzend kann das Token einen Gyrosensor aufweisen. Ein solcher Gyrosensor kann ein Beschleunigungssensor sein, der auf Beschleunigungen, Drehbewegungen oder Lageänderungen reagiert. Solche Information kann beispielsweise zum Steuern des Handwerkergeräts verwendet werden. Beispielsweise kann bei Herunterfallen eines Handwerkergeräts samt Token der Aufprall von einem Gyrosensor erfasst werden und das Handwerkergerät ausgeschaltet werden. Alternativ oder ergänzend kann der mindestens eine Sensor des Token einen Ortsbestimmungssensor aufweisen, zum Beispiel einen GPS-Sensor. Auf diese Weise kann der Token ermitteln, an welchem Ort sich der Token und ein damit mechanisch gekoppeltes Handwerkergerät aktuell befinden. Beispielsweise kann ein Betrieb des Handwerkergeräts auf einen bestimmten Ort oder Ortsbereich beschränkt sein (zum Beispiel auf eine bestimmte Baustelle). Erkennt der Ortsbestimmungssensor, dass sich Token und Handwerkergerät außerhalb eines solchen zugelassenen Raumbereichs befinden, kann der Token das Handwerkergerät so ansteuern, dass dessen Betrieb in einem nicht zugelassenen Raumbereich unterbunden wird. Dies verbessert den Schutz des Handwerkergeräts vor missbräuchlicher Verwendung. Ein Temperatursensor kann ebenfalls in dem Token implementiert sein. Beispielsweise kann eine Verwendung eines mit einem Token gekoppelten Handwerkergeräts steuerungstechnisch verunmöglicht werden, wenn eine erfasste Temperatur außerhalb eines zugelassenen Betriebsbereichs des Handwerkergeräts liegt. Wenn beispielsweise mittels eines Handgeräts ein chemischer Dübel gesetzt werden soll, die Umgebungstemperatur aber außerhalb eines zugelassenen Temperaturbereichs zum Setzen des chemischen Dübels liegt, kann das Setzen des chemischen Dübels unterbunden werden.

Gemäß einem exemplarischen Ausführungsbeispiel kann der Token mindestens eine Kommunikationsantenne aufweisen, insbesondere ausgewählt aus einer Gruppe bestehend aus einer GPS (Global Positioning System)-Antenne, einer BLE (Bluetooth Low Energy)-Antenne, einer Ultrabreitband (UWB, Ultra-wideband)-Antenne, einer Bluetooth-Antenne, einer WLAN (Wireless Local Area Network)-Antenne, und einer Narrowband Internet of Things (IoT)-Antenne. Mittels einer solchen Kommunikationsantenne ist eine drahtlose Kommunikation des Token über ein Kommunikationsnetzwerk möglich, was eine weiter verfeinerte Steuerung eines mechanisch mit dem Token gekoppelten Handwerkergeräts unter Verwendung von über das Kommunikationsnetzwerk übermittelten Daten ermöglicht.

Gemäß einem exemplarischen Ausführungsbeispiel kann der Prozessor aus einer Gruppe ausgewählt sein, die besteht aus einem Bluetooth-Prozessor, einem Narrowband Internet of Things (IoT)-Prozessor, einem LTE (Long Term Evolution)-Prozessor, einem 5G-Prozessor und einem NFC (Near Field Communication)-Prozessor. Alternativ oder ergänzend kann der Prozessor gemäß einem anderen existierenden oder zukünftigen Kommunikationsprotokoll operieren.

Gemäß einem exemplarischen Ausführungsbeispiel kann der Token eine Energieversorgungseinrichtung aufweisen. Beispielsweise kann eine (zum Beispiel auswechselbare) Batterie oder ein (insbesondere wiederaufladbarer) Akku in dem Token integriert sein. Die Ausstattung des Token mit einer Energieversorgungseinrichtung hat den Vorteil, dass der Token unabhängig von anderen Entitäten eine autarke Energieversorgung aufweist. Zum Beispiel kann der Token dann auch in einem nicht mit einem Handwerkergerät gekoppelten Zustand über ein Kommunikationsnetzwerk mit anderen Knoten kommunizieren. Alternativ kann der Token von einer solchen Energieversorgungseinrichtung frei sein und durch von einem Handwerkergerät bereitgestellte Energie betrieben werden. Beispielsweise kann bei Ausbilden der mechanischen Kopplung zwischen dem Token und dem Handwerkergerät eine induktive oder elektrisch leitfähige Kopplung zwischen Token und Handwerkergerät ausgebildet werden, über die der Token mit elektrischer Energie von einem Akku oder einem Netzanschluss des Handwerkergeräts versorgt werden kann.

Gemäß einem exemplarischen Ausführungsbeispiel kann der Token eine Kommunikationseinrichtung aufweisen, die zum Kommunizieren mittels eines Kommunikationsnetzwerks ausgebildet ist. Insbesondere kann der Token zum kryptografischen Kommunizieren unter Einsatz der Kryptographieeinheit ausgebildet sein. Beispielsweise kann das Kommunizieren mittels des öffentlichen Internets, mittels eines Intranets und/oder mittels eines Mobilfunknetzwerks erfolgen. Eine solche Kommunikationseinrichtung kann zum Beispiel eine Sende- und/oder Empfangs-Antenne und eine zugehörige Prozessor-Ressource beinhalten, die eine beispielsweise drahtlose Kommunikation entsprechend einem Kommunikationsprotokoll des Kommunikationsnetzwerks mit einem oder mehreren anderen Knoten eines solchen Kommunikationsnetzwerks ermöglichen. Auf diese Weise kann der Token über die Steuerung eines mechanisch mit ihm gekoppelten Handwerkergerätes hinaus unidirektional oder bidirektional mit einem oder mehreren anderen Knoten kommunizieren, zum Beispiel um Informationen herunterzuladen (Download) und/oder heraufzuladen (Upload). Zum Beispiel kann ein Download von Information von einem kommunizierfähig gekoppelten Knoten auf den Token ein Download eines Benutzerprofils oder einer Ablaufsteuerung eine Bearbeitungsaufgabe beinhalten, die von einem Benutzer mittels eines Handwerkergeräts ausgeführt werden soll, das mit dem Token mechanisch gekoppelt ist. Zum Beispiel kann ein Upload von Information von dem Token auf einen kommunizierfähig gekoppelten Knoten ein Upload von Tracking-Daten beinhalten, die zu Dokumentationszwecken und/oder zu Qualitätsüberwachungszwecken ein Nachverfolgen eines Betriebs des Token und/oder eines damit gekoppelten Handwerkergeräts ermöglichen. Auch Betriebsdaten, welche die Abarbeitung einer Bearbeitungsaufgabe durch ein mit dem Token gekoppeltes Handgerät dokumentieren, können von dem Token zu einem kommunizierfähig gekoppelten Knoten hochgeladen werden.

Gemäß einem exemplarischen Ausführungsbeispiel kann der Token ausgebildet sein, mittels der Kommunikationseinrichtung mit mindestens einem kommunizierfähig gekoppelten Knoten des Kommunikationsnetzwerks zu kommunizieren, der aus einer Gruppe ausgewählt ist, die besteht aus einem anderen Token, einem portablen Benutzerendgerät mit einer darauf gespeicherten App (die zum Kommunizieren mit einem Token konfiguriert sein kann), einer zentralen Steuereinrichtung (beispielsweise zum zentralen Verwalten oder Steuern von Handwerkergeräten einer Handwerkerausstattung), und einer Nachbestelleinrichtung zum Nachbestellen von Verbrauchsgütern zum Betrieb eines Handwerkergeräts. Gemäß einer Ausgestaltung können mehrere Token miteinander kommunizieren. Zum Beispiel kann ein erster Token mit einem ersten Handwerkergerät (zum Beispiel einem Handgerät wie etwa einem Schlagbohrer) und kann ein zweiter Token mit einem zweiten Handwerkergerät (zum Beispiel einer Arbeitsschutzausrüstung wie zum Beispiel einer Schutzbrille) mechanisch gekoppelt sein. Ist zum Beispiel für den Betrieb des Handgeräts die Verwendung einer Arbeitsschutzausrüstung vorgeschrieben, kann die Inbetriebnahme des Handgeräts davon abhängig gemacht werden, dass eine Kommunikation zwischen den beiden zugeordneten Token dokumentiert, dass der Benutzer des dem ersten Token zugeordneten Handgeräts die dem zweiten Token zugeordnete Arbeitsschutzausrüstung trägt. Es ist aber auch möglich, dass ein Benutzer ein Handwerkergerät von einem mit einer entsprechenden Software ausgerüsteten portablen Benutzerendgerät (zum Beispiel einem Mobilfunkgerät) und somit von entfernter Stelle aus steuert. Hierfür können das Benutzerendgerät und der Token miteinander über ein Kommunikationsnetzwerk kommunizieren. Bedarfsweise kann zum Steuern des Handwerkergeräts der Token auch Ressourcen des Benutzerendgeräts mitbenutzen, zum Beispiel eine Kamera-Ressource. Ferner ist es möglich, dass eine zentrale Steuereinrichtung eine Vielzahl von dezentralen Handwerkergeräten beispielsweise im Sinne von Benutzerprofilen steuert, die einzelnen Benutzern der dezentralen Handwerkergeräte eine benutzerspezifische Benutzung bestimmter Handwerkergeräte ermöglicht. Mit anderen Worten können Benutzerprofile von Benutzern an einer zentralen Steuereinrichtung gespeichert werden. Möchte ein mit einem Handwerkergerät mechanisch gekoppelter Token die Benutzung des Handwerkergeräts durch einen mittels des Token identifizierten Benutzer ermöglichen, kann der Token durch Kommunikation mit der zentralen Steuereinrichtung Zugriff auf das Benutzerprofil des zugehörigen Benutzers erlangen und die Benutzung des Handwerkergeräts durch diesen Benutzer nur dann zulassen, wenn die Benutzung des Handwerkergeräts durch den identifizierten Benutzer in Einklang mit dem Benutzerprofil steht. Zum Beispiel kann die Benutzung einer Kettensäge von einer entsprechenden Qualifikation oder Einweisung eines Benutzers abhängig gemacht werden, die in dem Benutzerprofil Niederschlag gefunden hat. Darüber hinaus kann es auch möglich sein, dass ein mit einem Handwerkergerät mechanisch gekoppelter Token einen Nachbestellungsbedarf zum Nachbestellen von Verbrauchsmaterial erkennt und an eine kommunizierfähig gekoppelte Nachbestelleinrichtung übermittelt. Beispielsweise kann ein solcher Token mit einem Verbrauchsmaterial aufnehmenden Behälter mechanisch gekoppelt sein und kann die sukzessive Entnahme von Verbrauchsmaterial aus diesem Behälter (zum Beispiel sensorisch) erkennen. Beispielsweise bei Absinken eines Restbestands von Verbrauchsmaterial unter einen vorgegebenen Schwellwert kann dann eine Nachbestellung durch den Token ausgelöst oder getriggert werden, und zwar durch direkte oder indirekte Kommunikation des Token mit der Nachbestelleinrichtung.

Gemäß einem exemplarischen Ausführungsbeispiel kann der Token ausgebildet sein, mittels der Kommunikationseinrichtung von einem kommunizierfähig gekoppelten Knoten des Kommunikationsnetzwerks einen Datensatz herunterzuladen, insbesondere einen einen Betriebsablauf des Handwerkergeräts definierenden Datensatz und/oder einen ein Benutzerprofil eines Benutzers des Token definierenden Datensatz. Eine kommunizierfähige Kopplung kann beispielsweise leitungsgebunden (zum Beispiel elektrisch über mindestens eine elektrische Leitung oder optisch über einen Lichtleiter) oder drahtlos (beispielsweise durch Übermittlung elektromagnetischer Strahlung, wie zum Beispiel sichtbares Licht, Infrarotlicht oder Hochfrequenzstrahlung) sein. Die genannten und/oder andere Daten können an zentraler Stelle des Kommunikationsnetzwerks, zum Beispiel bei einer zentralen Steuereinrichtung zum Steuern oder Verwalten einer Vielzahl von Handwerkergeräten, und somit mit insgesamt effizienter Ressourcenverwendung gespeichert sein. Bedarfsweise kann ein dezentraler - zum Beispiel mit einem Handwerkergerät mechanisch gekoppelter - Token über das Kommunikationsnetzwerk die Daten von der zentralen Steuereinrichtung oder einem anderen Knoten aus abrufen. Durch Abruf eines einen Betriebsablauf des Handwerkergeräts definierenden Datensatzes kann der Token Steuerinformationen zum entsprechenden Steuern des Handwerkergeräts zum Durchführen des besagten Betriebsablaufs erhalten und das Handwerkergerät nachfolgend entsprechend steuern. Zum Beispiel kann ein Setzen eines Befestigungselements (zum Beispiel einer Schraube) in einem Untergrund das Aufbringen eines bestimmten Drehmoments erfordern, dessen Größe der Token über das Kommunikationsnetzwerk abrufen kann. Es ist auch möglich, dass ein mittels des Token identifizierter Benutzer bestimmten Einschränkungen hinsichtlich der Verwendung eines mit dem Token mechanisch gekoppelten Handwerkergeräts unterworfen ist, sodass die Benutzung eines Handwerkergeräts durch einen bestimmten Benutzer durch den Token nur in Einklang mit einem entsprechenden Benutzerprofil zugelassen wird, das der Token über das Kommunikationsnetzwerk herunterladen kann.

Gemäß einem exemplarischen Ausführungsbeispiel kann der Token ausgebildet sein, mittels der Kommunikationseinrichtung zu einem kommunizierfähig gekoppelten Knoten des Kommunikationsnetzwerks einen Datensatz heraufzuladen, insbesondere einen Betriebsergebnisse und/oder Betriebsparameter eines Betriebs des Handwerkergeräts enthaltenden Datensatz. Zum Beispiel kann eine mittels eines Handwerkergeräts abgearbeitete Bearbeitungsaufgabe (zum Beispiel das Setzen eines Befestigungselements in einen Untergrund) in Form eines Datensatzes dokumentiert werden und als Betriebsergebnisse an einen Knoten des Kommunikationsnetzwerks (zum Beispiel eine zentrale Verwaltungs- oder Steuereinrichtung) übermittelt werden. Dies erlaubt eine spätere Nachverfolgung zu Dokumentations- und/oder Qualitätssicherungszwecken. Als Betriebsparameter im Zusammenhang mit der Abarbeitung einer Bearbeitungsaufgabe kann zum Beispiel ein tatsächlich aufgebrachtes Drehmoment eines Akku-Schraubers beim Einschrauben einer Schraube übermittelt werden.

Gemäß einem exemplarischen Ausführungsbeispiel kann der Prozessor ausgebildet sein, den Betrieb des mit dem Token gekoppelten Handwerkergeräts in Einklang mit einem Benutzerprofil, insbesondere in Einklang mit einem Benutzerberechtigungsprofil, des Benutzers des Tokens zu steuern. In dem Benutzerprofil können für einen bestimmten Benutzer Benutzungsberechtigungen, Benutzungsverbote und/oder Benutzungseinschränkungen hinsichtlich bestimmter Handwerkergeräte, insbesondere hinsichtlich bestimmter elektrischer Handgeräte, Werkzeuge und/oder Verbrauchsgüter geregelt sein.

Gemäß einem exemplarischen Ausführungsbeispiel kann der Token eine Speichereinrichtung aufweisen, in der das Benutzerprofil, insbesondere das Benutzerberechtigungsprofil, gespeichert ist. Eine solche Speichereinrichtung kann zum Beispiel ein elektronischer Speicher in Form eines Halbleiter-Speicherchips sein, der einen Teil des Token bildet. Bei lokaler Speicherung eines Benutzerprofils betreffend einen dem Token zugeordneten Benutzer und/oder von Steuerdaten zum Steuern von Handwerkergeräten zum Abarbeiten von bestimmten Bearbeitungsaufgaben kann der Aufwand im Zusammenhang mit der Übermittlung von Daten zwischen Token und damit kommunizierfähig gekoppelten Knoten gering gehalten werden.

Gemäß einem exemplarischen Ausführungsbeispiel kann der Prozessor ausgebildet sein, den Betrieb des mit dem Token gekoppelten Handwerkergeräts nur dann freizugeben, wenn eine mittels des Tokens vorab durchgeführte Benutzeridentifizierung zu dem Ergebnis geführt hat, dass ein sich identifizierender Benutzer für den Betrieb des Handwerkergeräts berechtigt ist. Indem vor Inbetriebnahme eines Handwerkergeräts mittels des Token überprüft wird, ob ein (zum Beispiel über einen Benutzeridentifizierungssensor wie einen Fingerprintsensor) identifizierter Benutzer zur Benutzung des Handwerkergeräts berechtigt und/oder befähigt ist, und indem die Freigabe zur Benutzung des Handwerkergeräts durch diesen Benutzer von einer Kompatibilität zwischen der gewünschten Benutzung des Handwerkergeräts und dem Benutzerprofil des Benutzers abhängig gemacht wird, kann die Betriebssicherheit beim Betrieb des Handwerkergeräts verbessert werden.

Gemäß einem exemplarischen Ausführungsbeispiel können die Token unterschiedlicher Grade an Funktionalität Sensoren unterschiedlicher Grade an Funktionalität aufweisen. Zum Beispiel kann in einem Token eines geringeren Grads an Funktionalität eine geringere Anzahl von Sensoren (zum Beispiel nur ein Benutzeridentifizierungssensor) vorgesehen sein als bei einem Token eines höheren Grads an Funktionalität (der zum Beispiel zusätzlich zu einem Benutzeridentifizierungssensor einen Ortsbestimmungssensor aufweist). Es ist auch möglich, in einem Token eines höheren Grads an Funktionalität einen Sensor (beispielsweise einen Ortsbestimmungssensor, der auch eine Bestimmung einer räumlichen Orientierung ermöglicht) zu implementieren, der im Vergleich zu einem Sensor (beispielsweise einen Ortsbestimmungssensor ohne sensorische Erfassung einer räumlichen Orientierung) in einem Token eines geringeren Grads an Funktionalität eine weitere Zusatzfunktion bereitstellt.

Gemäß einem exemplarischen Ausführungsbeispiel können die Token unterschiedlicher Grade an Funktionalität Prozessoren unterschiedlicher Grade an Funktionalität aufweisen. Beispielsweise kann ein Token eines höheren Grads an Funktionalität einen Prozessor mit einer höheren Leistungsfähigkeit (zum Beispiel mit einer höheren Taktfrequenz und/oder mit einer höheren Anzahl von CPU-Cores) aufweisen als ein Token eines geringeren Grads an Funktionalität. Es ist auch möglich, bei einem Token eines höheren Grads an Funktionalität zusätzlich zu einem Basis-Prozessor (zum Beispiel einem Mikroprozessor) einen weiteren Prozessor bereitzustellen, zum Beispiel einen Funkchip.

Gemäß einem exemplarischen Ausführungsbeispiel können die Token unterschiedlicher Grade an Funktionalität Kommunikationsantennen unterschiedlicher Grade an Funktionalität aufweisen. Zum Beispiel kann in einem Token eines geringeren Grads an Funktionalität eine geringere Anzahl von Kommunikationsantennen (zum Beispiel nur eine Kommunikationsantenne) vorgesehen sein als bei einem Token eines höheren Grads an Funktionalität (der zum Beispiel zusätzlich zu einer ersten Kommunikationsantenne zur Kommunikation gemäß einem ersten Kommunikationsprotokoll (zum Beispiel Bluetooth) eine zweite Kommunikationsantenne zur Kommunikation gemäß einem zweiten Kommunikationsprotokoll (zum Beispiel WLAN) ermöglicht.

Gemäß einem exemplarischen Ausführungsbeispiel können die Handwerkergeräte mindestens zwei unterschiedliche Elemente aus einer Gruppe ausweisen, die aus folgenden Elementen besteht: Aus einem elektrischen oder motorischen Handgerät (zum Beispiel einer Bohrmaschine), einem Werkzeug (zum Beispiel einem Bohrer) oder einem Werkzeugsatz (zum Beispiel einem Bohrersatz in einer Bohrerbox), einem Bevorratungssystem (zum Beispiel einem Koffer oder einer Werkzeugkiste), einem Verbrauchsgut (zum Beispiel einem Bolzenanker oder einer Schachtel mit Dübeln), und einem Fahrzeug (beispielsweise einem Personenkraftwagen oder einem Gabelstapler). Gemäß einem bevorzugten Ausführungsbeispiel können mehrere Handgeräte, mehrere Werkzeuge und/oder Werkzeugsätze, mehrere Bevorratungssysteme, mehrere Verbrauchsgüter und mehrere Fahrzeuge als Handwerkerausstattung verwaltet werden. Gemäß einer Konfiguration mit einer Vielzahl von Token und einer Vielzahl von Handwerkergeräten unterschiedlicher Typen, bei der ein jeweiliger Token mit jedem beliebigen Handwerkergerät mechanisch gekoppelt und dadurch in Wirkverbindung gebracht werden kann, ist ein komplexes und beliebig skalierbares modulares System geschaffen, das ein effizientes und betriebssicheres Management auch einer großen Anzahl von Handwerkergeräten ermöglicht. Indem eine Kommunikation zwischen einem jeweiligen Token und einem damit mechanisch gekoppelten Handwerkergerät und/oder eine Kommunikation zwischen unterschiedlichen Token und/oder mindestens einem weiteren Knoten in einem zugehörigen Kommunikationsnetzwerk zugelassen wird, kann auch ein riesiges, diversifiziertes und räumlich dezentrales System aus Handwerkergeräten (beispielsweise ein Maschinenpark oder Handwerkerequipment eines Unternehmens) fehlerrobust, betriebssicher und missbrauchssicher verwaltet werden.

Gemäß einem exemplarischen Ausführungsbeispiel kann zumindest eines der Handwerkergeräte als ein motorisches oder elektrisches Handgerät aus einer Gruppe ausgebildet sein, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, einem Hammerbohrer, einem kabelgebundenen Handgerät und einem druckluftbetriebenen Handgerät.

Im Folgenden werden exemplarische Ausführungsbeispiele der vorliegenden Erfindung mit Verweis auf die folgenden Figuren detailliert beschrieben.
Figur 1 zeigt eine Handwerkerausstattung mit Handwerkergeräten und Token gemäß einem exemplarischen Ausführungsbeispiel der Erfindung, die in einem Kommunikationsnetzwerk mit zusätzlichen kommunizierfähigen Knoten gekoppelt sind.
Figur 2 zeigt einen Token mit einer zugehörigen Aufbewahrungs- und Wiederaufladevorrichtung gemäß einem exemplarischen Ausführungsbeispiel der Erfindung.
Figur 3 zeigt einen Token gemäß einem exemplarischen Ausführungsbeispiel der Erfindung.
Figur 4 zeigt Komponenten einer Handwerkerausstattung gemäß einem anderen exemplarischen Ausführungsbeispiel der Erfindung.
Figur 5 zeigt eine Handwerkerausstattung mit Handwerkergeräten und einem Token gemäß einem exemplarischen Ausführungsbeispiel der Erfindung, die in einem Kommunikationsnetzwerk gekoppelt sind.

Gleiche oder ähnliche Komponenten in unterschiedlichen Figuren sind mit gleichen Bezugsziffern versehen.

Bevor bezugnehmend auf die Figuren exemplarische Ausführungsbeispiele der Erfindung beschrieben werden, sollen noch einige allgemeine Aspekte von Ausführungsbeispielen der Erfindung erläutert werden.

Gemäß einem exemplarischen Ausführungsbeispiel kann ein Token für eine Verwendung mit einem Handwerkergerät (zum Beispiel für eine Werkzeugmaschine) eingesetzt werden.

Hierbei kann der Token beispielsweise mit einem kombinierten elektrischen und mechanischen Aufbau bereitgestellt werden. Genauer gesagt können unterschiedliche Token einer Token-Anordnung einen gemeinsamen elektrischen und/oder mechanischen Grundaufbau haben, aber sich darüber hinaus hinsichtlich eines variablen elektrischen und/oder mechanischen Zusatzaufbaus unterscheiden. Als feste Konstituenten können unterschiedliche Token einer Token-Anordnung einen Prozessor (der zum Beispiel auch Nachverarbeitungs- und/oder Datenverdichtungs-Aufgaben ausführen kann), eine Kommunikationseinrichtung, und eine Kryptographieeinheit (insbesondere einen Decrypter) aufweisen. Ein variabler Anteil unterschiedlicher Token einer Token-Anordnung kann zum Beispiel Unterschiede hinsichtlich mindestens einer Sende-/ Empfangs-Einheit, mindestens einer Antenne und/oder mindestens eines Sensors aufweisen. Ein jeweiliger Token kann als Gegenstand ausgebildet sein, der eine Packaging-Komponente, eine oder mehrere Einschübe, eine Kompatibilität mit einer Batterie, und oder einen Leiteradapter aufweisen kann. Es ist auch möglich, dass ein Token mit elektrischem Strom von extern versorgt wird. Gemäß einem exemplarischen Ausführungsbeispiel kann ein Token-System eine (insbesondere indirekte) Steuerung eines Handwerkergerätes unter Einsatz eines Berechtigungskonzepts ausführen, insbesondere unter Einsatz eines personalisierten Berechtigungskonzepts.

Token einer Token-Anordnung können unterschiedliche Grade an Funktionalität aufweisen, und daher unterschiedlichen Generationen zugeordnet werden. Beispielsweise kann ein Token eines ersten Grads an Funktionalität prozessortechnisch bzw. kommunikativ als BLE-fähiger Token mit beschränkter Sensorik (beispielsweise lediglich mit einem Temperatur- und einem VibrationsSensor) ausgestattet sein. Mit einem solchen Token können beispielsweise Datenblätter von einem zentralen Knoten eines Kommunikationsnetzwerks heruntergeladen werden. Die Durchführung einer Bearbeitungsaufgabe mittels eines einem Token zugeordneten Handwerkergeräts kann beispielsweise von einer aktuellen Umgebungstemperatur abhängig gemacht werden. Beispielsweise kann das Setzen eines chemischen Dübels nur zugelassen werden, wenn eine minimale Verarbeitungstemperatur sichergestellt ist. Ein Token zweiter Generation kann zum Beispiel prozessortechnisch bzw. kommunikativ als Ultrabreitband-Token ausgebildet sein, der zusätzlich mit einem Gyrosensor ausgerüstet werden kann. Zum Beispiel kann ein solcher Gyrossensor erkennen, wenn ein Handgerät (beispielsweise eine Bohrmaschine) auf dem Boden fällt und kann das Handgerät dann automatisch abschalten. Ein Token dritter Generation kann wiederum zusätzlich mit einer NB IoT (Narrow Band Internet of Things) Funktionalität ausgerüstet werden und zusätzlich mit einem GPS-Sensor. Ein Token dritter Generation kann somit dazu in der Lage sein, eine Ortsbestimmung des Token und eines damit mechanisch gekoppelten Handwerkergeräts durchzuführen und eine Freigabe zum Betrieb des Handwerkergeräts nur zu erteilen, wenn der ermittelte Ort für den beabsichtigten Betrieb des Handwerkergeräts zugelassen ist. Beispielsweise kann die Inbetriebnahme eines Baggers nur freigegeben werden, wenn sich der Bagger auf einer bestimmten Baustelle befindet. Dadurch ist ein Missbrauchsschutz bereitgestellt.

Gemäß einem exemplarischen Ausführungsbeispiel der Erfindung bildet ein Token eine Basiseinheit eines Systems zum gesteuerten Betrieb von Handwerkergeräten. Ein solche Token kann einen festen Bestandteil (insbesondere mit Microcontroller, Decrypter) aufweisen, der in jedem Token einer Token-Anordnung enthalten sein kann. Ferner kann jeder Token einer Token-Anordnung eine elektromechanische Anbindung zu Handwerkergeräten ermöglichen (insbesondere einen oder mehrere elektrische Kontakte zum elektrischen Koppeln mit einem Handwerkergerät bereitstellen). Darüber hinaus können Token einer Token-Anordnung einen variablen Anteil aufweisen, der für unterschiedliche Token unterschiedlich sein kann. Ein solcher variabler Anteil kann die Ausstattung eines Token mit einem oder mehreren Sensoren (zum Beispiel Fingerprintsensor, Gyroskop, GPS-Sensor, UWB-Sensor, Temperatursensor), mindestens einem Funkchip (zum Beispiel konfiguriert gemäß Bluetooth Low Energy, Bluetooth, NB-IoT, LTE Cat. M, 5G, NFC) und/oder mindestens einer Antenne (zum Beispiel konfiguriert gemäß 2.5 GPS, BLE, UWB, NB-IoT) betreffen. Optional kann ein Token mit einer eigenen Stromversorgung ausgerüstet werden, beispielsweise einer Batterie oder einem Akku.

Ein oder mehrere Token mit den beschriebenen Eigenschaften kann oder können einen Teil eines Systems einer Handwerkerausstattung bilden, das zudem Handwerkergeräte (wie zum Beispiel Akku-Bohrer, Werkzeuge, Koffer, Regale, etc.) umfassen kann. Auch Software-Komponenten (zum Beispiel eine IoT Cloud-Software, eine App, etc.) können Teil eines solchen Systems sein.

Bevorzugt weist ein Token gemäß einem exemplarischen Ausführungsbeispiel der Erfindung eine mechanische Kopplungseinrichtung auf, die als elektromechanische Kopplung ausgebildet sein kann. Diese mechanische Kopplungseinrichtung kann an oder in elektromechanische Kupplungen von Handwerkergeräten (wie zum Beispiel Handgeräten, Werkzeugen, Koffern, Regale, etc.) gesteckt werden. Es ist auch möglich, eine mechanische Kopplungseinrichtung eines Token an oder in einem dafür vorgesehenen Gehäuse (zum Beispiel eines Trackers) oder an oder in weiteren Geräten (zum Beispiel eine Vorrichtung zum Befüllen entleerter Spraydosen und dergleichen) anzubringen.

Im Betrieb kann ein Token mit dem Handwerkergerät oder einer sonstigen Vorrichtung, in das bzw. die der Token gesteckt werden ist, kommunizieren. Auf diese Weise kann ein Token feststellen, an bzw. in welchem Gegenstand der Token steckt. Daher ist ein einheitlicher Bus für alle Gegenstände vorteilhaft. Dies stellt sicher, dass in einem komplexen System einer Handwerkerausstattung (beispielsweise ein Maschinenpark oder Handwerkerausrüstung eines Unternehmens) jeder Token mit jedem Handwerkergerät in mechanische und kommunikative Verbindung (insbesondere Steuer-Verbindung) gebracht werden kann. Allgemeiner ausgedrückt können alle Handwerkergeräte einer Handwerkerausstattung mit einer mechanisch identisch ausgebildeten mechanischen Verbindungseinrichtung ausgestattet sein, die alle eine wahlweise Kopplung mit demselben Token ermöglichen. Anders ausgedrückt kann der Token als Modul in all diese Gegenstände modulartig steckbar sein.

Gemäß einem exemplarischen Ausführungsbeispiel kann ein Token Dokumente und/oder Steuersignale zu dem Handwerkergerät (zum Beispiel einem Akkubohrer) übermitteln, in das der Token gesteckt wurde. Alternativ oder ergänzend ist es möglich, dass ein Token Dokumente betreffend ein mit einem Handgerät verbundenes Zusatzgerät (zum Beispiel ein Werkzeug, ein Adapter, etc.) runterlädt. Ein Token kann auch Dokumente betreffend ein mit einem Handwerkergerät zu verarbeitenden Werkstück (zum Beispiel ein Betonanker) runterladen und damit das Handwerkergerät entsprechend steuern (zum Beispiel Steuern einer Drehzahl zum Bohren und/oder Eindrehen eines Betonankers).

Bevorzugt kann ein Token Berechtigungen für ein Handwerkergerät (zum Beispiel ein Handgerät, Werkzeug, Koffer, Regal, etc.) runterladen, damit das Handwerkergerät nur in einem bestimmten räumlichen Bereich betrieben werden kann (zum Beispiel Bohrmaschinen nur auf einer Baustelle). Hierfür kann zum Beispiel ein GPS-Sensor in dem Token oder zugehörigen Handwerkergerät implementiert sein, der aktuelle Ortsinformation liefert.

Insbesondere kann ein Token gemäß einem exemplarischen Ausführungsbeispiel der Erfindung Berechtigungen für ein Handwerkergerät (zum Beispiel ein Handgerät, Werkzeug, Koffer, Regal, etc.) runterladen, damit das Handwerkergerät nur von bestimmten Personen benutzt oder betrieben werden kann (beispielsweise nur eingewiesenes Personal). Der Token kann insbesondere Berechtigungen für das Handwerkergerät runterladen, damit das Handwerkergerät nur mit bestimmter persönlicher Schutzausrüstung betrieben werden kann.

Ein Token kann ein mechanisch damit gekoppeltes Handwerkergerät steuern, zum Beispiel einen Staubsauger ein- bzw. ausschalten. Zum Beispiel kann der Token beim Einschalten einer Bohrmaschine auch ein Einschalten einer Bohrmehlabsaugung auslösen, sodass ein Benutzer zum Einschalten eines zugehörigen Staubsaugers keine weitere Hand benötigt.

Gemäß einem Ausführungsbeispiel kann ein Token mit einem optischen Sensor (beispielsweise einer Kamera oder einem Laserscanner) ausgestattet sein, um ein Produkt oder einen Körper (zum Beispiel eine Wand oder eine Schraube) zu identifizieren, der mit einem Handwerkergerät verarbeitet wird.

Es ist auch möglich, dass der Token von einem damit kommunizierfähig gekoppelten Knoten eines Kommunikationsnetzwerks Produktinformation zu dem Produkt herunterlädt. Dem Token oder einem damit mechanisch gekoppelten Handwerkergerät ist dann bekannt, wie das Produkt zu verarbeiten ist, beispielsweise welches Drehmoment aufzubringen ist.

Ein Token gemäß einem exemplarischen Ausführungsbeispiel der Erfindung kann mit mindestens einer anderen Entität (insbesondere mindestens einem weiteren Token, einer zentralen Steuereinrichtung, einer Nachbestelleinrichtung, einem portablen Benutzerendgerät, etc.) kommunizierfähig gekoppelt sein. Dies kann über ein zugehöriges Kommunikationsnetzwerk erfolgen, indem Kommunikation entsprechend einem zugehörigen Kommunikationsprotokoll ermöglicht ist. Als mögliche Kommunikationsnetzwerke können gemäß exemplarischen Ausführungsbeispielen der Erfindung insbesondere ein WLAN (Wireless Local Area Network)-Kommunikationsnetzwerk, ein LAN (Local Area Network)-Kommunikationsnetzwerk, ein PAN (Personal Area Network)-Kommunikationsnetzwerk, ein LPWAN (Low Power Wide Area Network)-Kommunikationsnetzwerk und/oder ein SIM (Subscriber Identity Module)-Kommunikationsnetzwerk (insbesondere eSIM, nuSIM oder nanoSIM) eingesetzt werden.

Bevorzugt weist ein Token eine Funkverbindung zu einem Kommunikationsnetzwerk (insbesondere dem öffentlichen Internet und/oder einem Intranet) auf. Zu diesem Zweck kann ein Token zum Beispiel mit einer WLAN-Antenne (zum Beispiel mit einer Reichweite von bis zu 5 m) ausgerüstet werden.

Ein Token gemäß einem exemplarischen Ausführungsbeispiel der Erfindung kann über eine Funk- oder Leitungsverbindung kommunizierfähig mit einem Handwerkergerät gekoppelt werden. Bevorzugt ist ein solches Token modulartig austauschbar in verschiedene Handwerkergeräte, zum Beispiel elektrische oder motorische Handgeräte (zum Beispiel Akkubohrer, Akku, Adapter), Werkzeuge, Bevorratungssysteme (wie zum Beispiel Koffer, Regale), etc., einführbar. Zum Beispiel kann ein Token ein Gehäuse mit einem Tracker aufweisen.

Bevorzugt kann ein Token gemäß einem exemplarischen Ausführungsbeispiel der Erfindung eine elektromechanische Schnittstelle aufweisen, die mit einer immergleichen mechanischen Verbindungsschnittstelle einer Vielzahl von Handwerkergeräten elektromechanisch verbunden werden kann.

Gemäß einem Ausführungsbeispiel der Erfindung kann ein Token von einem kommunizierfähig gekoppelten Knoten Dokumente oder Datensätze runterladen. Beispielsweise kann eine Steuerung eines mit dem Token mechanisch gekoppelten Handwerkergeräts unter Verwendung der heruntergeladenen Dokumente oder Datensätze durchgeführt werden. Alternativ oder ergänzend kann ein Token gemäß einem exemplarischen Ausführungsbeispiel der Erfindung Dokumente oder Datensätze zu einem mit dem Token kommunizierfähig gekoppelten Knoten hochladen (zum Beispiel Fehlermeldungen, Zustandsinformationen, Sensor-Daten).

Ein Token kann vorteilhaft Berechtigungen in einem Nutzersystem für Handwerkergeräte auf einer Cloud laden and Handwerkergeräte und dergleichen basierend darauf sperren oder geeignet steuern.

Insbesondere kann ein Token gemäß einem exemplarischen Ausführungsbeispiel in verschiedenen Varianten einer Token-Anordnung aus Token unterschiedlicher Grade an Funktionalität verschiedene Technologien unterstützen. Beispielsweise kann ein Token einer ersten Generation nur Bluetooth unterstützen und als Sensoren lediglich einen Temperatursensor und einen Vibrationssensor aufweisen. Ein Token zweiter Generation kann zusätzlich eine NB-IoT-Funktionalität aufweisen und als Sensoren ergänzend ein Gyroskop aufweisen. Auch ein GPS-Sensor, ein UWB-Modul und/oder ein Fingerprintsensor kann oder können in einem Token zweiter Generation enthalten sein.

Ein Token kann insbesondere in Verbindung mit einer auf einem Mobilfunkgerät eines Benutzers installierten App stehen, beispielsweise um Werkzeug (zum Beispiel einen Bohrer) bzw. ein Werkstück (zum Beispiel einen Betonanker) zu erkennen und entsprechend zu steuern und zu verarbeiten.

Vorteilhaft kann ein Token gemäß einem exemplarischen Ausführungsbeispiel in Verbindung mit einem Gateway sein. Alternativ oder ergänzend kann ein Token in Kommunikationsverbindung mit einem oder mehreren anderen Token stehen.

Ein Token gemäß einem exemplarischen Ausführungsbeispiel der Erfindung kann auch eine Diebstahlsicherung für ein zugeordnetes Handwerkergerät bereitstellen. Zum Beispiel kann ein Token zu diesem Zweck mit einem Benutzeridentifizierungssensor (zum Beispiel einem Fingerprintsensor, einem Gesichtserkennungssensor oder dergleichen) ausgestattet sein, um einen rechtmäßigen Benutzer zu identifizieren. Ein Betrieb eines zugehörigen Handwerkergeräts kann nur mit entsprechend freigegebenem Token zugelassen werden. Ist ein Dieb oder ein nichtautorisierter Benutzer im Besitz eines Handwerkergeräts samt Token, kann der Dieb bzw. der nichtautorisierte Benutzer das Handwerkergerät dennoch nicht betreiben, da hierfür eine Identifizierung eines autorisierten Benutzers über den Benutzeridentifizierungssensor erforderlich ist.

Zum Beispiel kann für eine Berechtigung eines Benutzers indikative Information (zum Beispiel ein Berechtigungsprofil) auf einem Token gespeichert sein. Alternativ oder ergänzend kann solche Berechtigungsinformation auch an anderer Stelle in einem Kommunikationsnetzwerk, zum Beispiel in einer Cloud, gespeichert sein.

Beispielsweise kann ein Token eine Berechtigung eines Benutzers und/oder für Handwerkergeräte in Bezug auf einen Benutzer von einem Knoten (insbesondere einer Cloud) herunterladen. Ein solches Benutzerprofil kann von dem Token dann eingesetzt werden, um ein mit dem Token mechanisch gekoppeltes Handwerkergerät in Einklang mit dem Benutzerprofil zu steuern. Vorteilhaft kann der Token Informationen hinsichtlich der Berechtigungen eines Benutzers nach jedem Runterladen lokal speichern, damit diese Informationen auch Offline zur Verfügung stehen. Berechtigungsprofile können alternativ oder zusätzlich auch in einem Handwerkergerät (zum Beispiel in einer Bearbeitungsmaschine und/oder in einem Akku-Block gespeichert werden).

Gemäß einem exemplarischen Ausführungsbeispiel kann sich ein Token dann an der Bearbeitungsmaschine und/oder dem Akku-Block oder einem anderen Handwerkergerät identifizieren.

Vorteilhaft können Berechtigungen eines Berechtigungsprofils auch benutzerspezifische Daten umfassen, d.h. auf mindestens ein persönliches Merkmal des Benutzers bezogen sein. Ist beispielsweise ein Handwerkergerät für einen Benutzer (beispielsweise in einem fortgeschrittenen Lebensalter) zu schwer, kann dieses Handwerkergerät für diesen Benutzer gesperrt werden.

Gemäß einem exemplarischen Ausführungsbeispiel der Erfindung kann ein Token in einen Tracker eingesteckt werden. Ein solcher Tracker erlaubt dann die Ortung des Token über einen großen Raumbereich hinweg. Zum Beispiel kann ein solcher Tracker an einer Maschine der Handwerkerausstattung befestigbar sein, beispielsweise durch Kleben, durch einen Magnet oder durch mechanisches Verrasten. Der Token kann beispielsweise in einen solchen Tracker eingesteckt werden. Der Tracker kann insbesondere eine Batterie und eine oder mehrere Antennen für RFID und/oder WLAN und/oder Bluetooth haben, um das räumliche Lokalisieren des Token über ein oder mehrere Kommunikationsprotokolle zu ermöglichen.

Ein Token gemäß einem exemplarischen Ausführungsbeispiel der Erfindung ist somit für verschiedene Benutzungsarten konfiguriert bzw. konfigurierbar: Zum Beispiel kann ein solcher Token auf einen bestimmten Benutzer hin personalisiert werden, indem dem Token der Benutzer über ein auf dem Token gespeichertes oder von dem Token abrufbares Benutzerprofil fest zugeordnet wird. Alternativ oder ergänzend ist es möglich, einen solchen Token mit einem Handwerkergerät zu koppeln, um ein Handwerkergerät einer größeren Handwerkerausstattung in einer räumlich verteilten Anordnung von Handwerkergeräten schnell orten zu können. Alternativ oder ergänzend ist es auch möglich, ein Token mit einer zentralen Steuereinrichtung kommunizieren zu lassen, damit zwischen Token und zentraler Steuereinrichtung Information unidirektional oder bidirektional übermittelt werden kann. Beispielsweise kann von der Steuereinrichtung an den Token Steuerinformation zum Steuern der Durchführung einer Bearbeitungsaufgabe (zum Beispiel dem Bohren eines Lochs in einer Betonwand) durch ein mit dem Token mechanisch gekoppeltes Handwerkergerät übermittelt werden. Es ist auch möglich, von dem Token auf die zentrale Steuereinrichtung Information hochzuladen, zum Beispiel hinsichtlich eines aktuellen Beladungszustands eines Akkus des Token und/oder eines damit mechanisch gekoppelten Handwerkergeräts oder über den Befüllungszustand eines Bevorratungssystems der Handwerkerausstattung, zum Beispiel eines Regals.

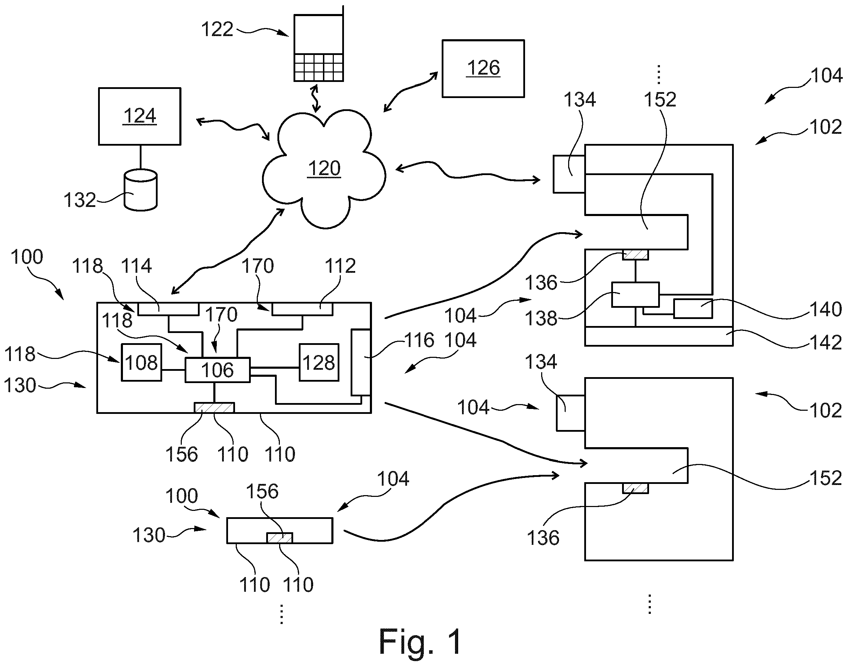

**Figur 1** zeigt eine Handwerkerausstattung 104, beispielsweise eine Werkstattausstattung oder ein Maschinenpark oder Handwerkerequipment eines Unternehmens, mit Handwerkergeräten 102 und Token 100 gemäß einem exemplarischen Ausführungsbeispiel der Erfindung, die in einem Kommunikationsnetzwerk 120 gekoppelt sind.

Genauer gesagt weist die Handwerkerausstattung 104 eine Vielzahl von Token 100 aus, die zum Beispiel alle in gleicher Weise geformt und dimensioniert sein können. In Figur 1 sind nur zwei solche Token 100 dargestellt, jedoch ist eine viel größere Anzahl von Token 100 in einer Handwerkerausstattung 104 möglich (zum Beispiel mindestens zehn, insbesondere mindestens hundert).

Darüber hinaus ist in der Handwerkerausstattung 104 eine Mehrzahl von Handwerkergeräten 102 vorgesehen. In Figur 1 sind nur zwei solche Handwerkergeräte 102 dargestellt, jedoch ist eine viel größere Anzahl von Handwerkergeräten 102 in einer Handwerkerausstattung 104 möglich (zum Beispiel mindestens zehn, insbesondere mindestens hundert). Ein Teil oder alle der Handwerkergeräte 102 können eine identisch geformte und dimensionierte mechanische Aufnahmeeinrichtung 152 aufweisen, hier ausgebildet als Einsteck- oder Aufnahmeöffnung, die zum mechanischen Koppeln mit einer jeweiligen mechanischen Kopplungseinrichtung 110 eines beliebigen, benutzerseitig ausgewählten der Token 100 ausgebildet ist. Zwischen jeder mechanischen Kopplungseinrichtung 110 jedes Token 100 und jeder mechanischen Aufnahmeeinrichtung 152 jedes Handwerkergeräts 102 kann durch Zusammenstecken eine formschlüssige Verbindung ausgebildet werden.

Wenn eine mechanische Verbindung zwischen einem Token 100 und einem ausgewählten Handwerkergerät 102 ausgebildet ist, indem die mechanische Kopplungseinrichtung 110 des Token 100 in die Aufnahmeeinrichtung 152 des ausgewählten Handwerkergeräts 102 eingesteckt wird, wird simultan eine Wirk- oder Kommunikationsverbindung zwischen Token 100 und Handwerkergerät 102 ausgebildet. Genauer gesagt wird in dem dargestellten Ausführungsbeispiel eine elektrische Verbindung zwischen einem oder mehreren elektrischen Kontakten 156 an einer Außenseite jedes Token 100 und einem oder mehreren elektrischen Gegenkontakten 136 an einer Innenseite jeder Aufnahmeeinrichtung 152 jedes Handwerkergeräts 102 ausgebildet. Das Ausbilden eines Formschlusses zwischen einem jeweiligen Token 100 und einer jeweiligen Aufnahmeeinrichtung 152 eines Handwerkergeräts 102 führt somit zum Ausbilden eines elektrischen Kontakts und somit einer elektrisch leitfähigen Verbindung zwischen dem Token 100 und diesem Handwerkergerät 102. Durch diese elektrische Verbindung ist auch eine elektrische Kommunikationsverbindung zwischen dem Token 100 und dem Handwerkergerät 102 ausgebildet, die insbesondere die Übermittlung elektrischer Signale (beispielsweise Steuersignale) ermöglicht. Alternativ zu dieser kontaktbehafteten elektrischen Kopplung kann eine drahtlose bzw. kontaktlose Kommunikationsverbindung zwischen einem Token 100 und einem Handwerkergerät 102 ausgebildet werden, indem durch Einführen des Token 100 in die Aufnahmeeinrichtung 152 ein Transponder (zum Beispiel ein RFID-Tag, nicht gezeigt) des Token 100 in einen Lesbarkeitsabstand eines Transponder-Lesegeräts (zum Beispiel ein RFID-Lesegerät, nicht gezeigt) des Handwerkergeräts 102 gebracht wird (nicht dargestellt).

Vorteilhaft ist ein Token 100, wenn dieser durch Einführen in die Aufnahmeeinrichtung 152 eines Handwerkergeräts 102 in Kommunikationsverbindung mit dem Handwerkergerät 102 gebracht worden ist, zum Steuern von diesem Handwerkergerät 102 ausgebildet. Ein Betrieb des Handwerkergeräts 102 in einem Zustand ohne Kopplung mit dem Token 100 kann unterbunden sein. Anders ausgedrückt kann erst durch eine erfolgreiche Kopplung von Token 100 und Handwerkergerät 103 dessen Benutzung freigegeben werden.

Indem jeder Token 100 wahlweise mit jeder mechanischen Aufnahmeeinrichtung 152 eines ausgewählten Handwerkergeräts 102 gekoppelt werden kann, ist ein flexibel kombinierbares, modulares System zum Betrieb, zur Steuerung und/oder zum Verwalten von Handwerkergeräten 102 in einer komplexen Handwerkerausrüstung 100 geschaffen.

In Figur 1 sind die Handwerkergeräte 102 nur teilweise und nur schematisch dargestellt. Beispielsweise kann ein erster Teil der Handwerkergeräte 102 als elektrische oder motorische Handgeräte ausgebildet sein, zum Beispiel als elektrische Bohrmaschinen, elektrische Akkuschrauber, etc. Als elektrische oder motorische Handgeräte ausgebildete Handwerkergeräte 102 können zum Beispiel eine Funktionseinrichtung 134 aufweisen, welche die eigentliche Funktion des jeweiligen Handgeräts ausführt und mittels eines elektrischen oder motorischen Antriebs angetrieben werden kann. Bei einem als Bohrmaschine ausgebildeten Handwerkergerät 102 kann die Funktionseinrichtung 134 zum Beispiel ein Bohrfutter (insbesondere mit Bohrer) sein. Bei einem als Akku-Schrauber ausgebildeten Handwerkergerät 102 kann die Funktionseinrichtung 134 zum Beispiel eine Bitaufnahme (insbesondere mit Bit) sein. Ferner kann ein Handgerät eine Energieversorgungseinrichtung 142 aufweisen, zum Beispiel einen abnehmbaren und wiederaufladbaren Akku-Block. Eine solche Energieversorgungseinrichtung 142 kann im Betrieb die Funktionseinrichtung 134 mit elektrischer Antriebsenergie versorgen. Alternativ oder ergänzend kann die Energieversorgungseinrichtung 142 auch ein Token 100 mit elektrischer Energie versorgen, wenn dieser in der Aufnahmeeinrichtung 152 aufgenommen ist. Auch kann ein Handgerät eine Steuereinrichtung 138 aufweisen, die zum Steuern des Handgeräts (zum Beispiel, wenn ein Handgerät mit keinem Token 100 gekoppelt ist) und/oder zum Zusammenwirken mit einem Prozessor 106 eines gekoppelten Token 100 ausgebildet sein kann.

Ein zweiter Teil (nicht gezeigt) der Handwerkergeräte 102 kann als (insbesondere nichtelektrische oder nichtmotorische) Werkzeuge bzw. Werkzeugsätze ausgebildet sein, zum Beispiel als Schraubendreher, Bohrer oder Bohrerbox, Bit oder Bitbox, etc.

Ein dritter Teil (nicht gezeigt) der Handwerkergeräte 102 kann als Bevorratungssysteme zum Bevorraten von Handgeräten, Werkzeugen und Verbrauchsgut ausgebildet sein. Beispiele für solche Bevorratungssysteme sind Kästen, Koffer, Schubladen und/oder Regale zum Aufnehmen bzw. Bevorraten von Handgeräten, Werkzeug und/oder Verbrauchsgut.

Ein vierter Teil (nicht gezeigt) der Handwerkergeräte 102 kann als Verbrauchsgut ausgebildet sein, beispielsweise Kartons mit Schrauben oder Dübeln, oder als Bolzenanker.

Ein fünfter Teil (nicht gezeigt) der Handwerkergeräte 102 kann als motorisch angetriebene Fahrzeuge ausgebildet sein, zum Beispiel als PKWs oder LKWs, Gabelstapler und/oder als Bagger, wie sie beim Durchführen von Handwerksaufgaben zum Einsatz kommen. Auch mit Muskelkraft angetriebene nichtmotorische Fahrzeuge, wie ein schiebbarer Werkzeugwagen, können eingesetzt werden.

Ein sechster Teil (nicht gezeigt) der Handwerkergeräte 102 kann als sonstige Hilfsmittel und Gerätschaften der Handwerkerausstattung 104 ausgebildet sein, beispielsweise als Leitern, Gerüste, etc.

Ein Teil oder jeder der beschriebenen Handwerkergeräte 102 kann vorübergehend oder dauerhaft mit einem Token 100 ausgerüstet werden.

Vorteilhaft sind die Handwerkergeräte 102 zum Koppeln mit den Token 100 derart ausgebildet, dass eine Benutzung eines mit einem Token 100 gekoppelten Handwerkergeräts 102 durch einen Benutzer basierend auf einem personalisierten Berechtigungsprofil zugelassen, eingestellt und/oder unterbunden werden kann. Genauer gesagt kann einem Benutzer eines Token 100 ein Benutzerprofil zugewiesen sein, das Informationen in Hinblick auf eine Befähigung und Berechtigung dieses Benutzers zur Benutzung bestimmter Handwerkergeräte 102 beinhalten kann, aber auch Benutzungseinschränkungen und/oder Benutzungsverbote hinsichtlich bestimmter Handwerkergeräte 102 definieren kann. Ein solches Benutzerprofil kann in einer Speichereinrichtung 128 eines Token 100, in einer Speichereinrichtung 140 eines Handwerkergeräts 102 und/oder in einer Datenbank 132 eines mit dem Token 100 über ein Kommunikationsnetzwerk 120 kommunizierfähig gekoppelten Knoten (in dem dargestellten Ausführungsbeispiel eine zentrale Steuereinrichtung 124, alternativ ein anderer Knoten) gespeichert sein.

Im Weiteren wird exemplarisch der Aufbau des Token 100 näher beschrieben, der in Figur 1 im Detail dargestellt ist. Besagter Token 100 dient zum Beispiel zum benutzerbezogenen Steuern eines auswählbaren der Handwerkergeräte 102 der Handwerkerausstattung 104 und weist zu diesem Zweck einen Prozessor 106 auf. Zum Beispiel kann der Prozessor 106 im Inneren des Token 100 eingebettet sein und dadurch geschützt sein. Der Prozessor 106 kann zum Beispiel als Mikroprozessor ausgebildet sein. Es ist möglich, den Prozessor 106 als einen Teil einer Prozessoreinheit, als gesamte Prozessoreinheit oder als Mehrzahl von zusammenwirkenden Prozessoreinheiten auszubilden. Der Prozessor 106 des Token 100 dient zum steuerungstechnischen Zusammenwirken mit unterschiedlichen Handwerkergeräten 102 der Handwerkerausstattung 104, und wirkt insbesondere funktional mit einem ausgewählten Handwerkergerät 102 zusammen, in dessen Aufnahmeeinrichtung 152 der Token 100 eingeführt ist.

Ferner enthält der Token 100 eine Kryptographieeinheit 108, die ein kryptografisches Kommunizieren des Token 100 unterstützt. Genauer gesagt kann mittels der Kryptographieeinheit 108 eine Kommunikation des Token 100 mit einem Kommunikationspartnergerät in dem Kommunikationsnetzwerk 120 verschlüsselt erfolgen. Beispielsweise kann eine solche, von der Kryptographieeinheit 108 unterstützte verschlüsselte Kommunikation zwischen dem Token 100 einerseits und andererseits einer zentralen Steuereinrichtung 124, einem Benutzerendgerät 122 und/oder einer Nachbestelleinrichtung 126 erfolgen. Die verschlüsselte Kommunikation erhöht die Datensicherheit bei der Kommunikation über das Kommunikationsnetzwerk 120. Optional ist es auch möglich, mittels der Kryptographieeinheit 108 eine verschlüsselte Kommunikation zwischen dem Token 100 und einem mit diesem mechanisch gekoppelten Handwerkergerät 102 durchzuführen, beispielsweise bei der Übermittlung von Steuersignalen von dem Token 100 an ein als Handgerät ausgebildetes Handwerkergerät 102. Dies führt zu einer sicheren Steuerung eines jeweiligen Handwerkergeräts 102, da ein Hackerangriff oder eine unbefugte Steuerung von außen dadurch unterbunden werden kann.

Wie bereits angesprochen, weist der Token 100 die mechanische Kopplungseinrichtung 110 auf, die zum vorzugsweise formschlüssigen mechanischen Koppeln mit einer Aufnahmeeinrichtung 152 von einem jeweiligen von unterschiedlichen Handwerkergeräten 102 der Handwerkerausstattung 104 ausgebildet ist. Die mechanische Kopplungseinrichtung 110 des Token 100 ist durch dessen äußere Formgebung definiert, die invers zur inneren Formgebung einer Aufnahmeeinrichtung 152 eines jeweiligen Handwerkergeräts 102 gestaltet ist.

Mit Vorteil kann der Token 100 ausgebildet sein, bei mechanischem Koppeln der mechanischen Kopplungseinrichtung 110 mit einer Aufnahmeeinrichtung 152 eines ausgewählten Handwerkergeräts 102 mittels des Prozessors 106 (und optional der Kryptographieeinheit 108 unter Einsatz kryptografischer Kommunikation) den Betrieb des besagten Handwerkergeräts 102 zu steuern. Genauer gesagt kann der Prozessor 106 des Token 100 das Handwerkergerät 102 und insbesondere dessen Funktionseinrichtung 134 so steuern, dass die gewünschte Bearbeitungsaufgabe durch das Handwerkergerät 102 bestimmungsgemäß durchgeführt wird. Beispielsweise kann der Prozessor 106 des Token 100 vorgeben, welches Drehmoment von einem Bohrer eines als Bohrmaschine ausgebildeten Handwerkergeräts 102 auf einen Untergrund aufgebracht wird, in dem ein Bohrloch gebohrt werden soll.

Mit Vorteil kann der Token 100 zum benutzerbezogenen Steuern des Handwerkergeräts 102 ausgebildet sein, insbesondere auf Basis eines personalisierten Berechtigungsprofils des Benutzers. Zu diesem Zweck kann der Token 100 mit einer Identifizierungseinrichtung 170 versehen sein, die zum Identifizieren eines Benutzers des Token 100 ausgebildet ist. Die Identifizierungseinrichtung 170 ist durch einen zum Beispiel als Fingerprintsensor ausgebildeten Sensor 112 und den Teil des Prozessors 106 gebildet, der aus mittels des Sensors 112 ermittelten Sensordaten den Benutzer identifiziert, beispielsweise durch einen Musterabgleich mit Referenzdaten. Genauer gesagt ist der Sensor 112 zum Beispiel als Fingerprintsensor ausgebildet, auf den ein Benutzer zum Identifizieren einen Finger auflegt. Vorteilhaft kann der Sensor 112 daher in einem Oberflächenbereich des Token 100 angebracht sein. Der Sensor 112 kann dann ermitteln, ob die von dem Sensor 112 erfassten Daten anzeigen, dass es sich bei dem Benutzer um einen berechtigten oder autorisierten Benutzer handelt bzw. um welchen Benutzer es sich handelt. Diese Ermittlung kann durch Vergleich der sensorisch erfassten Daten mit Sensor-Referenzdaten (zum Beispiel einem in einer Datenbank hinterlegten Fingerabdruck eines autorisierten Benutzers) durchgeführt werden.

Die bereits angesprochene Speichereinrichtung 128 des Token 100 kann Informationen speichern, die für ein personalisiertes Berechtigungsprofil des Benutzers in Bezug auf das Handwerkergerät 102 indikativ sind oder einen Zugang hierzu gewähren. Genauer ausgedrückt kann in der Speichereinrichtung 128 des Token 100 ein Datensatz gespeichert sein, der ein Berechtigungsprofil eines Benutzers (oder mehrere Berechtigungsprofile mehrerer Benutzer) darstellt oder abbildet. Es ist allerdings auch möglich, dass das Berechtigungsprofil von einem oder mehreren Benutzern in einer in Bezug auf den Token 100 entfernt angeordneten Entität gespeichert ist, zum Beispiel in einer zentralen Datenbank 132 einer zentralen Steuereinrichtung 124, über die der Token 100 mittels des Kommunikationsnetzwerks 120 kommunizierfähig gekoppelt sein kann. Zum Zugriff auf ein Berechtigungsprofil eines Benutzers kann es dann ausreichend sein, in dem Token 100 Zugriffsinformationen (zum Beispiel einen Link auf die zentrale Datenbank 132, gegebenenfalls in Kombination mit einem Passwort) zum Zugriff auf das entfernt gespeicherte Berechtigungsprofil zu speichern.

Der Prozessor 106 kann ausgebildet sein, den Betrieb des mit dem Token 100 gekoppelten Handwerkergeräts 102 in Einklang mit dem Benutzerberechtigungsprofil des Benutzers des Token 100 zu steuern. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer zum Betrieb des Handwerkergeräts 102 autorisiert ist. Mit Vorteil kann der Prozessor 106 des Token 100 also ausgebildet sein, bei Koppeln mit dem Handwerkergerät 102 eine Benutzung des Handwerkergeräts 102 durch den Benutzer basierend auf dem personalisierten Berechtigungsprofil zuzulassen, einzustellen und/oder zu unterbinden. Beispielsweise kann eine von einem Benutzer gewünschte Bearbeitungsaufgabe unter Verwendung eines Handwerkergeräts 102 nur für bestimmte Benutzer zugelassen sein, zum Beispiel wenn der Benutzer eine bestimmte Einweisung erhalten hat oder eine besondere Qualifizierung (zum Beispiel einen Führerschein) zur Benutzung des Handwerkergeräts 102 erhalten hat. Erfüllt das Berechtigungsprofil des Benutzers eine solche Bedingung nicht, kann die Benutzung des Handwerkergeräts 102 durch den Prozessor 106 des Token 100 unterbunden werden. Erfüllt indes das Berechtigungsprofil des Benutzers eine solche Bedingung, kann die Benutzung des Handwerkergeräts 102 durch den Prozessor 106 des Token 100 zugelassen werden. Sind aufgrund eines Berechtigungsprofils bestimmte Bearbeitungsaufgaben für einen Benutzer nur eingeschränkt zugelassen, wird die Benutzung des Handwerkergeräts 102 durch den Benutzer nur zugelassen, wenn eine zugehörige Bedingung erfüllt ist. Beispielsweise kann die Benutzung eines Handwerkergeräts 102 durch einen Benutzer nur dann zugelassen sein, wenn dieser eine Schutzausrüstung (zum Beispiel eine Schutzbrille) trägt. Ist eine solche Schutzausrüstung ebenfalls mit einem Token 100 ersehen, kann der Prozessor 106 nach einem kommunizierfähig gekoppelten und eine Schutzausrüstung anzeigenden Token 100 suchen, und die gewünschte Bearbeitungsaufgabe durch einen Benutzer erst dann zulassen, wenn die Anwesenheit einer Schutzausrüstung durch die Anwesenheit einen solchen Token 100 erkannt worden ist.

Wie in Figur 1 dargestellt, kann die Handwerkerausstattung 104 eine Token-Anordnung 130 aus einer Mehrzahl von Token 100 aufweisen, wobei unterschiedliche der Token 100 unterschiedliche Grade an Funktionalität aufweisen. Beispielsweise können die Token 100 einer Handwerkerausstattung 104 in Token 100 einer ersten, zweiten und dritten Generation unterteilt werden. Jeder Token 100 einer beliebigen Generation kann dabei die Grundfunktion eines Token 100 erfüllen, wie oben beschrieben. Token 100 höherer Generationen können darüber hinaus Zusatzfunktionen und/oder Zusatzkomfort aufweisen, unterstützen aber auch die Grundfunktion eines Token 100 der niedrigsten Generation. Token 100 aller Generationen können die gleiche Form haben und können zum Einsatz mit beliebigen Handwerkergeräten 102 der Handwerkerausstattung 104 verwendet werden. Anders ausgedrückt ist die Token-Anordnung 130 hinsichtlich unterschiedlicher Generationen von Token 100 kompatibel. Die Handwerkergeräte 102 bedürfen keiner Anpassung in Hinblick auf ihr Zusammenwirken mit einem Token 100 einer jeweiligen Generation, außer dass eine Aufnahmeeinrichtung 152 zum mechanischen Aufnehmen eines zugehörigen Token 100 vorgesehen wird.

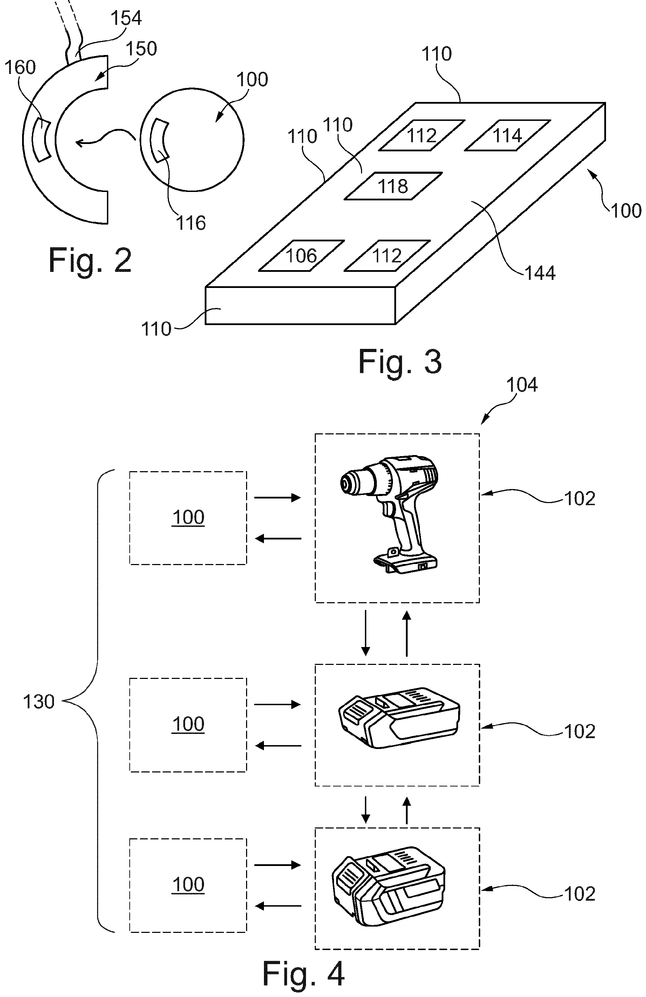

Jeder der eingesetzten Token 100 kann zum Beispiel als Steckelement zum Einstecken in eine Aufnahmeöffnung eines Handwerkergeräts 102 ausgebildet sein. Zum Beispiel kann jeder Token 100 als Kreisscheibe mit einem Durchmesser in einem Bereich von 2 cm bis 4 cm ausgebildet sein und ist daher von einem Benutzer bequem handhabbar und platzsparend in ein Handwerkergerät 102 einführbar. Andere Formen eines Token 100 sind möglich, siehe zum Beispiel Figur 3. Ferner ist die mechanische Kopplungseinrichtung 110 jedes Token 100 ausgebildet, den Token 100 mit dem Handwerkergerät 102 abnehmbar zu koppeln. Somit kann ein Benutzer einen (ihm beispielsweise zugeordneten) Token 100 nacheinander in Kombination mit unterschiedlichen Handwerkergeräten 102 einsetzen, wobei die Auswahl eines adressierten Handwerkergeräts 102 durch bloßes mechanisches Einführen der mechanischen Kopplungseinrichtung 110 des Token 100 in eine zugehörige Aufnahmeeinrichtung 152 eines Ziel-Handwerkergeräts 102 erfolgen kann. Somit dient die mechanische Kopplungseinrichtung 110 eines Token 100 als für unterschiedliche Handwerkergeräte 102 universelle elektromechanische Schnittstelle.

Wie bereits angesprochen, kann der Token 100 einen oder mehrere Sensoren 112 aufweisen, unter anderem den oben beschriebenen Benutzeridentifizierungssensor. Es ist alternativ oder ergänzend möglich, den Token 100 zum Beispiel mit einem Gyrosensor, einem Ortsbestimmungssensor und/oder einem Temperatursensor auszurüsten. Ein Gyrosensor kann etwa erkennen, wenn ein Handwerkergerät 102 mit darin aufgenommenem Token 100 herunterfällt und folglich einer Erschütterung ausgesetzt ist. Das Handwerkergerät 102 kann in diesem Fall vorsorglich ausgeschaltet werden, um Verletzungen eines Benutzers und Beschädigungen zu vermeiden. Ein Ortsbestimmungssensor (zum Beispiel ein GPS-Sensor) des Token 100 erlaubt die Erkennung einer aktuellen Position des Token 100 samt Handwerkergerät 102. Die Verwendung eines Handwerkergeräts 102 kann (zum Beispiel in einem Benutzerprofil) auf einen bestimmten Raumbereich (beispielsweise eine bestimmte Baustelle) eingeschränkt sein, zum Beispiel um Missbrauch zu vermeiden. Erkennt ein Ortsbestimmungssensor, dass sich ein Handwerkergerät 102 samt Token 100 an einem zur Verwendung nicht zugelassenen Ort befindet, kann der Prozessor 106 des Token 100 das Handwerkergerät 102 zur Vermeidung von Missbrauch ausschalten oder deaktivieren. Ein Temperatursensor des Token 100 kann die Umgebungstemperatur erfassen. Ist eine Bearbeitungsaufgabe (zum Beispiel das Setzen eines chemischen Dübels) nur unter bestimmten Temperaturbedingungen erlaubt, kann aus Sicherheitsgründen ein Betrieb des Handwerkergeräts 102 verunmöglicht werden, wenn eine Temperaturbedingung angesichts erfasster Temperatursensordaten nicht erfüllt ist.

Optional weist der Token 100 eine Energieversorgungseinrichtung 116 auf, zum Beispiel eine auswechselbare Batterie oder einen wiederaufladbaren Akku. Dann kann der Token 100 autonom betrieben werden. Alternativ oder ergänzend kann der Token 100 von einer Energieversorgungseinrichtung 142 eines Handwerkergeräts 102 mit elektrischer Energie versorgt werden, wenn der Token 100 in der Aufnahmeeinrichtung 152 aufgenommen ist.

Figur 1 zeigt weiter, dass der Token 100 eine Kommunikationsantenne 114 aufweisen kann, beispielsweise eine WLAN-Antenne. Es ist auch möglich und aus Gründen der Diversität vorteilhaft, wenn das Token 100 mehrere Kommunikationsantennen 114 aufweist, die zum Beispiel unterschiedliche Kommunikationsprotokolle unterstützen. Beispielsweise kann eine Kommunikationsantenne 114 in Form einer ebenen Spule realisiert sein, die vorzugsweise in einem Oberflächenbereich des Token 100 angeordnet ist. Eine Kommunikationsantenne 114 kann als Sende-/Empfangs-Antenne ausgebildet sein. Es ist auch möglich, eine Sendeantenne und eine separate Empfangsantenne vorzusehen, oder nur eine dieser Antennen.

Zudem weist der in Figur 1 dargestellte Token 100 eine Kommunikationseinrichtung 118 auf, die durch ein Zusammenwirken der Kommunikationsantenne 114 mit einem entsprechenden Teil des Prozessors 106 und optional mit der Kryptographieeinheit 108 gebildet sein kann. Die Kommunikationseinrichtung 118 dient zum Kommunizieren des Token 100 mit einem oder mehreren Kommunikationsknoten über das Kommunikationsnetzwerk 120. Dieses kann zum Beispiel das öffentliche Internet, ein Intranet oder ein Mobilfunknetzwerk sein.

Zum Beispiel kann der Token 100 über das Kommunikationsnetzwerk 120 - oder direkt - mit einem anderen Token 100 der Handwerkerausstattung 104 kommunizieren. Dies kann zum Beispiel zu dem Zweck erfolgen, die Anwesenheit einer mit einem Token 100 ausgerüsteten Schutzausrüstung zu erkennen (was aus Gründen der Arbeitssicherheit zur Bedingung für die Freigabe zur Benutzung eines Handwerkergeräts 102 gemacht werden kann).

Alternativ oder ergänzend ist es möglich, über das Kommunikationsnetzwerk 120 eine kommunizierfähige Kopplung zwischen dem Token 100 und einer auf einem portablen Benutzerendgerät 122 gespeicherten App oder sonstigen Software auszubilden. Im dargestellten Ausführungsbeispiel ist das Benutzerendgerät 122 ein Mobilfunkgerät mit einer Benutzeroberfläche, mit welcher ein Benutzer den kommunizierfähig gekoppelten Token 100 und/oder ein damit gekoppeltes Handwerkergerät 102 steuern und/oder überwachen kann. Mittels des Benutzerendgeräts 122 kann ein Benutzer auch von entfernter Position aus die Handwerkerausstattung 104 steuern und/oder überwachen. Beispielsweise kann sich ein Token 100 über eine App mit dem hier als Mobilfunkgerät ausgebildeten Benutzerendgerät 122 verbinden. Mittels des Benutzerendgeräts 122 können Daten auf den Token 100 heruntergeladen werden, beispielsweise ein Benutzerprofil eines Benutzers des Benutzerendgeräts 122. Ferner ist es möglich, dass der Token 100 im Betrieb auf Ressourcen des Benutzerendgerät 122 zugreift, beispielsweise auf einen darin enthaltenen Prozessor und/oder auf eine Kamera des Benutzerendgeräts 122.

Beispielsweise kann eine in dem Benutzerendgerät 122 enthaltene Kamera verwendet werden, um ein Bild von einer Produktverpackung aufzunehmen, das einen Rückschluss auf ein für eine Bearbeitungsaufgabe verwendetes Verbrauchsmaterial (zum Beispiel eine Schraubenart) ermöglicht. Diese Information kann von dem Benutzerendgerät 122 zu dem Token 100 übermittelt werden, sodass die Steuerung eines Beispiel als Akku-Schrauber ausgebildeten Handwerkergeräts 102 zum Setzen einer entsprechenden Schraube durch den Token 100 entsprechend durchgeführt werden kann. Allgemeiner ausgedrückt kann zum Beispiel an dem Token 100 und/oder an dem Benutzerendgerät 122 eine optische Detektionseinrichtung, insbesondere eine Kamera, vorgesehen sein, die zum Detektieren einer für eine mittels des Handwerkergeräts 102 auszuführenden Bearbeitungsaufgabe indikativen Bearbeitungsinformation ausgebildet ist. Vorteilhaft kann der Prozessor 106 zum Ausführen der Bearbeitungsaufgabe unter Verwendung der detektierten Bearbeitungsinformation ausgebildet sein.

Alternativ oder ergänzend ist es möglich, über das Kommunikationsnetzwerk 120 eine kommunizierfähige Kopplung zwischen dem Token 100 und einer zentralen Steuereinrichtung 124 (zum Beispiel zum Steuern mehrerer Handwerkergeräte 102) auszubilden. Die zentrale Steuereinrichtung 124 kann mit einem Zugriffsrecht auf eine Datenbank 132 ausgestattet sein, aus der Datensätze an den Token 100 übermittelt werden können. Solche Datensätze können zum Beispiel ein von dem Token 100 angefordertes Benutzerprofil, ein Betriebsdatensatz zum Ausführen einer Bearbeitungsaufgabe mit einem mit dem Token 100 mechanisch gekoppelten Handwerkergerät 102, etc. Somit kann der Token 100 ausgebildet sein, mittels der Kommunikationseinrichtung 118 von der zentralen Steuereinrichtung 124 oder einem anderen kommunizierfähig gekoppelten Knoten des Kommunikationsnetzwerks 120 einen Datensatz herunterzuladen, insbesondere einen einen Betriebsablauf des Handwerkergeräts 102 definierenden Datensatz und/oder einen ein Benutzerprofil eines Benutzers des Token 100 definierenden Datensatz.

Ferner ist es möglich, durch die kommunizierfähige Kopplung zwischen dem Token 100 und der zentralen Steuereinrichtung 124 Daten von dem Token 100 an die Steuereinrichtung 124 zum Speichern in der Datenbank 132 zu übermitteln. Solche Daten können zum Beispiel Tracking-Daten sein, die ein Nachverfolgen eines mit einem jeweiligen Token 100 gekoppelten Handwerkergeräts 102 erlauben. Somit kann der Token 100 ausgebildet sein, mittels der Kommunikationseinrichtung 118 zu der Steuereinrichtung 124 oder einem anderen kommunizierfähig gekoppelten Knoten des Kommunikationsnetzwerks 120 einen Datensatz heraufzuladen, insbesondere einen Betriebsergebnisse und/oder Betriebsparameter eines Betriebs des Handwerkergeräts 102 enthaltenden Datensatz.

Schließlich ist es möglich, dass der Token 100 über das Kommunikationsnetzwerk 120 mit einer Nachbestelleinrichtung 126 zum Nachbestellen von Verbrauchsgütern zum Betrieb eines Handwerkergeräts 102 gekoppelt ist. Erkennt ein Token 100 (beispielsweise mittels eines Tokeneigenen, beispielsweise optischen, Sensors 112 und/oder mittels eines Kamerabilds des Benutzerendgeräts 122), dass ein Restbestand eines bestimmten Verbrauchsguts (zum Beispiel einer bestimmten Art von Schrauben zum Setzen in einen Untergrund mittels eines als Akkuschrauber ausgebildeten Handwerkergeräts 102, in das der Token 100 eingeführt ist) unter einen kritischen Schwellwert abgesunken ist, kann der Token 100 über das Kommunikationsnetzwerk 120 die Nachbestelleinrichtung 126 entsprechend informieren und dadurch eine Nachbestellung dieses Verbrauchsguts auslösen bzw. triggern. Die Nachbestelleinrichtung 126 kann ein Computer sein, der seinerseits über das Kommunikationsnetzwerk 120 mit Lieferanten-Knoten gekoppelt sein kann, um die Nachbestellung auszuführen. Ein Nachbestellen von Verbrauchsgütern kann also von einem Token 100 ausgelöst werden, zum Beispiel wenn mittels des Token 100 und/oder eines Handwerkergeräts 102 zum Beispiel sensorisch erfasst worden ist, dass ein Restbestand von bestimmten Verbrauchsgütern unter einen vorgegebenen Schwellwert abgesunken ist.

Im Betrieb der Handwerkerausstattung 100 kann zum benutzerbezogenen Steuern eines Handwerkergeräts 102 mittels eines Token 100 zunächst ein Identifizieren eines Benutzers des Token 100 mittels des als Fingerprintsensor ausgebildeten Sensors 112 erfolgen. Danach kann ein mechanisches Koppeln der mechanischen Kopplungseinrichtung 110 des Token 100 mit der mechanischen Verbindungseinrichtung 152 des ausgewählten Handwerkergeräts 102 erfolgen. Vor oder nach dem mechanischen Koppeln kann ein personalisiertes Berechtigungsprofil des Benutzers des Token 100 aufgefunden werden, beispielsweise in einer der Speichereinrichtungen 128, 140. Nach erfolgtem mechanischen Koppeln kann ein Steuern des Handwerkergeräts 102 mittels des Prozessors 106 durchgeführt werden. Hierbei kann mit Vorteil eine Benutzung des Handwerkergeräts 102 durch den Benutzer basierend auf dem personalisierten Berechtigungsprofil zugelassen, unterbunden und/oder eingestellt werden. Insbesondere kann der Prozessor 106 ausgebildet sein, den Betrieb des mit dem Token 100 gekoppelten Handwerkergeräts 102 nur dann freizugeben, wenn eine mittels des Token 100 vorab durchgeführte Benutzeridentifizierung zu dem Ergebnis geführt hat, dass ein sich identifizierender Benutzer für den Betrieb des Handwerkergeräts 102 berechtigt ist. Hierbei kann das personalisierte Berechtigungsprofil zumindest eine Information aus einer Gruppe aufweisen, die besteht aus einem auf eine Benutzerqualifikation und/oder auf ein körperliches (zum Beispiel eine körperliche Einschränkung) oder biologisches (zum Beispiel ein fortgeschrittenes Alter) Benutzermerkmal bezogenes Benutzungsverbot für mindestens einen definierten Betriebsmodus des Handwerkergeräts 102, einer benutzerspezifischen Benutzungserlaubnis für mindestens einen definierten Betriebsmodus des Handwerkergeräts 102, und einer zum Beispiel arbeitsschutzbezogenen Benutzungsbedingung für die Benutzung des Handwerkergeräts 102. Beispielsweise kann das Berechtigungsprofil für einen bestimmten Benutzer die Information beinhalten, dass der Benutzer aufgrund seiner körperlichen Konstitution (beispielsweise aufgrund seines Lebensalters, seiner Größe und/oder seines Gewichts) nur zur Verwendung von Handwerkergeräten 102 bis zu einem bestimmten Gewicht (beispielsweise bis zu 20 kg) befähigt ist. Ferner kann in einem solchen Berechtigungsprofil für einen bestimmten Benutzer hinterlegt sein, für welche Handwerkergeräte 102 der Benutzer betriebsberechtigt ist (zum Beispiel kann die Benutzung eines Gabelstaplers einem Benutzer nur erlaubt werden, wenn dieser einen Gabelstapler-Führerschein hat). Ferner kann für einen bestimmten Benutzer und/oder für ein bestimmtes Handwerkergerät 102 in einem Benutzerprofil hinterlegt werden, welche Arbeitsschutzausrüstung (zum Beispiel Arbeitsschutzkittel, Ohrenschützer, Schutzbrille) von einem Benutzer zu tragen ist, um ein bestimmtes Handwerkergerät 102 benutzen zu dürfen. Die Verwendung eines Handwerkergeräts 102 kann einem Benutzer von dem Token 100 so lange verweigert werden, bis die Arbeitsschutzausrüstung an diesem Benutzer (beispielsweise sensorisch) erkannt worden ist. Beispielsweise kann auch die Arbeitsschutzausrüstung mit einem entsprechenden Token 100 ausgestattet sein, sodass durch Token-Token-Kommunikation das Vorliegen von Arbeitsschutzausrüstung an dem Benutzer nachgewiesen werden kann.

Der Prozessor 106 kann ausgebildet sein, bei Koppeln mit dem Handwerkergerät 102 basierend auf dem personalisierten Berechtigungsprofil ein Herunterladen eines Datensatzes (zum Beispiel ein Datenblatt), insbesondere eines einen Betriebsablauf des Handwerkergeräts 102 definierenden Datensatzes, aus einem Kommunikationsnetzwerk 120 zuzulassen oder zu unterbinden. Beispielsweise kann ein optischer Sensor (insbesondere eine Kamera) des Token 100 und/oder an einem Handwerkergerät 102 eine Produktpackung mit Schrauben scannen, die in einer Betriebsart des Handwerkergeräts 102 in einem Untergrund (beispielsweise einer vertikalen Betonwand) gesetzt werden soll. Auf diese Weise kann zum Beispiel sensorisch erkannt werden, dass es sich bei den Schrauben um M8 Schrauben handelt. Der Token 100 kann dann einen Download einer Produktspezifikation (als einen Betriebsablauf definierender Datensatz) entsprechend der sensorisch erfassten Produktpackung durchführen oder initiieren. Auf Basis des heruntergeladenen Datensatzes kann dann die Ausführung der Bearbeitungsaufgabe fehlerfrei erfolgen, und zwar durch eine Steuerung des Handwerkergeräts 102 durch den Token 100 unter Verwendung des heruntergeladenen Datensatzes.

**Figur 2** zeigt einen Token 100 mit einer zugehörigen Aufbewahrungs- und Wiederaufladevorrichtung gemäß einem exemplarischen Ausführungsbeispiel der Erfindung.

Genauer gesagt weist die in Figur 2 dargestellte Token-Anordnung den Token 100 und eine Token-Aufnahme 150 auf, die zum formschlüssigen und/oder kraftschlüssigen Aufnehmen des Token 100 ausgebildet sein kann. Hierfür kann der Token 100 in einen Aufnahmeraum der Token-Aufnahme 150 eingeklemmt werden, der zwischen einander gegenüberliegenden elastischen Schenkeln der Token-Aufnahme 150 begrenzt ist. Auf diese Weise kann ein Benutzer den Token 100 mechanisch geschützt verwahren, zum Beispiel unter Verwendung eines Verbindungselements 154. Mittels des Verbindungselements 154 kann ein Benutzer die Token-Aufnahme 150, optional samt darin aufgenommenem Token 100, in fixierter Weise mit sich führen, beispielsweise an einer Gürtelschlaufe befestigen.

Es ist auch möglich, einen Token 100 mit ganz oder teilweise entleerter Energieversorgungseinrichtung 116 (beispielsweise einem wiederaufladbaren Akku) an der Token-Aufnahme 150 anzubringen und dadurch ein Wiederaufladen der Energieversorgungseinrichtung 116 auszulösen. Hierfür kann (zum Beispiel durch einen elektrischen Kontakt oder in induktiver Weise) elektrische Energie von einer Ladeeinrichtung 160 der Token-Aufnahme 150 in die Energieversorgungseinrichtung 116 des Token 100 transferiert werden.

**Figur 3** zeigt einen Token 100 gemäß einem exemplarischen Ausführungsbeispiel der Erfindung. Der Token 100 gemäß Figur 3 ist als rechteckförmiger Streifen ausgebildet, der intuitiv in eine invers geformte Aussparung im Inneren eines Handwerkergeräts 102 eingeführt werden kann.

**Figur 4** zeigt Komponenten einer Handwerkerausstattung 104 gemäß einem anderen exemplarischen Ausführungsbeispiel der Erfindung.

Die Handwerkerausstattung 104 gemäß Figur 4 enthält zum Beispiel drei Handwerkergeräte 102 und beispielsweise drei Token 100.

Die drei Handwerkergeräte 102 gemäß Figur 4 sind als Bohrmaschine (oben), Sensormodul (Mitte) und Batterie-Block (unten) ausgebildet und miteinander verbindbar. Im Betrieb versorgt der Batterie-Block die Bohrmaschine mit elektrischer Energie, während das Sensormodul Betriebsdaten der Bohrmaschine sensorisch erkennt (und diese beispielsweise als Basis für eine Steuerung verwendet). Zwischen Bohrmaschine und Sensormodul ist jeweils eine bidirektionale Signalkopplung (d.h. in Senderichtung und in Empfangsrichtung) ermöglicht, siehe die beiden Pfeile. In entsprechender Weise ist zwischen Sensormodul und Batterie-Block eine bidirektionale Signalkopplung ermöglicht.

Zwischen jedem der Handwerkergeräte 102 und einem jeweiligen der Token 100 ist ebenfalls eine bidirektionale Signalkopplung ermöglicht. Die Konfiguration gemäß Figur 4 zeigt, dass alle Komponenten 102, 100 gleichberechtigt miteinander kommunizieren können. Die Kommunikationsschnittstellen zwischen den Komponenten 102, 100 können zum Beispiel gemäß einem UART (Universal Asynchronous Receiver Transmitter) Protokoll ausgebildet sein.

Die dargestellten Token 100 können eine Token-Anordnung 130 aus Token 100 unterschiedlicher Grade von Funktionalität bilden, wobei jeder der Token 100 der Token-Anordnung 130 mit jedem beliebigen der Handwerkergeräte 102 mechanisch und funktional gekoppelt werden kann.

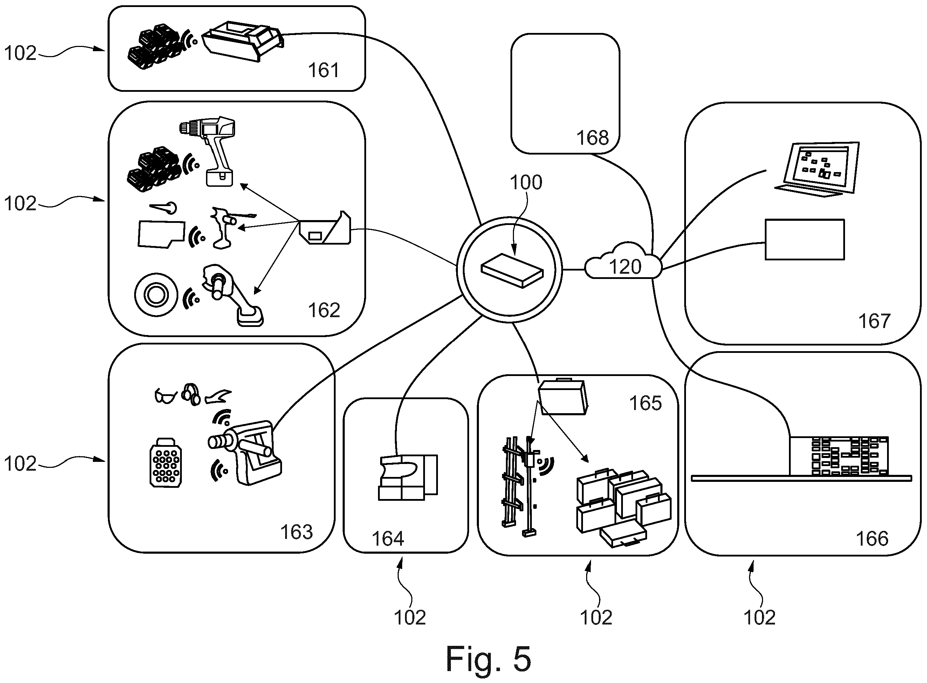

**Figur 5** zeigt eine Handwerkerausstattung 104 mit Handwerkergeräten 102 und einem Token 100 gemäß einem exemplarischen Ausführungsbeispiel der Erfindung, die in einem Kommunikationsnetzwerk 120 gekoppelt sind. Figur 5 zeigt eine modular ausgebildete Handwerkerausstattung 104 in einer Internet of Things (IoT)-Architektur.

Bezugszeichen 161 zeigt Adapter, Bezugszeichen 162 zeigt Handgeräte, Bezugszeichen 163 zeigt persönliche Schutzausrüstung und Wearables, Bezugszeichen 164 zeigt die Anwendung von Handwerkergeräten 164 einer dritten Partei, Bezugszeichen 165 zeigt Tracker-Elemente, Bezugszeichen 166 zeigt Bevorratungssysteme, Bezugszeichen 167 zeigt ein Warenbestandverwaltungssystem, und Bezugszeichen 168 zeigt einen Online-Shop. All diese Systeme können in die Token-gesteuerte Handwerkerausstattung 104 mit einbezogen werden.

Im Weiteren wird ein anderes Anwendungsbeispiel eines Token gemäß einem exemplarischen Ausführungsbeispiel der Erfindung beschrieben. Zu einer vorgegebenen Zeit (beispielsweise zu einer vorgegebenen Tageszeit, etwa am Feierabend) kann der Token Betriebsdaten zu einem Zielgerät oder in eine Speichereinrichtung (beispielsweise in eine Cloud, eine auf einem portablen Nutzer-Endgerät gespeicherte App, etc.) übertragen. Solche Betriebsdaten können zum Beispiel eine Information hinsichtlich eines identifizierten Nutzers des Token und/oder eines damit gekoppelten Handwerkergeräts enthalten. Ferner können solche Betriebsdaten die Information enthalten, dass mit besagtem Handwerkergerät an einem bestimmten Tag bestimmte Arbeitsschritte ausgeführt worden sind (insbesondere unter Hinzufügung von Zusatzinformationen wie Drehmoment, Drehzahl und/oder Uhrzeit).

Gemäß einem anderen Anwendungsbeispiel eines anderen exemplarischen Ausführungsbeispiels der Erfindung kann - insbesondere mittels eines Token - eine Kommunikation zwischen mehreren Geräten, insbesondere zwischen mehreren Handwerkergeräten, durchgeführt werden. Beispielsweise kann eine Kommunikation zwischen einem ersten Handwerkergerät (zum Beispiel einem Hauptgerät) und einem zweiten Handwerkergerät (zum Beispiel einem Nebengerät) durchgeführt werden. Zum Beispiel kann ein erstes Handwerkergerät (zum Beispiel eine Bohrmaschine) ein zweites Handwerkergerät (zum Beispiel einen Staubsauger) einschalten, wenn eine Bohraufgabe durchgeführt wird. In einem anderen Beispiel kann ein Kernbohrer mit einer Führungsschiene zum Führen des Kernbohrers kommunizieren, beispielsweise um aktuelle Ortsinformation zu übermitteln. Ferner ist es möglich, dass ein Roboter mit einem externen Gerät kommuniziert, beispielsweise zum Abgleichen oder Sicherstellen, ob sich der Roboter richtig im Raum positioniert hat.

Gemäß einem exemplarischen Ausführungsbeispiel der Erfindung ist es auch möglich, ein Token als Tracker in ein Handwerkergerät (zum Beispiel in ein Powertool, ein Akku-Gehäuse, etc.) zu implementieren. Dadurch kann eine Ortsbestimmung des Handwerkergeräts ermöglicht werden. Optional kann auch mindestens ein Sensor bzw. mindestens ein weiterer Sensor in den Token integriert werden, beispielsweise ein Temperatursensor und/oder ein Feuchtigkeitssensor.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Token (100) für Handwerkergeräte (102) einer Handwerkerausstattung (104), wobei der Token (100) aufweist:
einen Prozessor (106); und
eine mechanische Kopplungseinrichtung (110),
**gekennzeichnet durch**
eine Kryptographieeinheit (108), die zum kryptografischen Kommunizieren des Token (100) ausgebildet ist, **indem sie Signale verschlüsselt und/oder entschlüsselt;**
wobei der Prozessor (106) zum, insbesondere steuerungstechnischen, Zusammenwirken mit unterschiedlichen Handwerkergeräten (102) der Handwerkerausstattung (104) ausgebildet ist;
wobei die mechanische Kopplungseinrichtung (110) zum mechanischen Koppeln mit unterschiedlichen Handwerkergeräten (102) der Handwerkerausstattung (104) ausgebildet ist; und
wobei der Token (100) ausgebildet ist, bei mechanischem Koppeln der mechanischen Kopplungseinrichtung (110) mit einem Handwerkergerät (102) mittels des Prozessors (106) mit dem besagten Handwerkergerät (102) Daten auszutauschen, und insbesondere das besagte Handwerkergerät (102) zu steuern.

2. Token (100) gemäß Anspruch 1, wobei der Token (100) als Steckelement zum Einstecken in eine Aufnahmeöffnung eines Handwerkergeräts (102) ausgebildet ist.

3. Token (100) gemäß Anspruch 1 oder 2, aufweisend eines der folgenden Merkmale:
wobei der Token (100) als Scheibe, insbesondere als Kreisscheibe, mit einem Durchmesser in einem Bereich von 1 cm bis 10 cm ausgebildet ist, insbesondere in einem Bereich von 2 cm bis 5 cm;
wobei der Token (100) als Quader mit einer Kantenlänge in einem Bereich von 1 cm bis 10 cm ausgebildet ist, insbesondere in einem Bereich von 2 cm bis 5 cm.

4. Token (100) gemäß einem der Ansprüche 1 bis 3, wobei die mechanische Kopplungseinrichtung (110) ausgebildet ist, den Token (100) von dem Handwerkergerät (102) abnehmbar zu koppeln.

5. Token (100) gemäß einem der Ansprüche 1 bis 4, wobei die mechanische Kopplungseinrichtung (110) eine elektromechanische Schnittstelle aufweist, insbesondere eine für unterschiedliche Handwerkergeräte (102) universelle elektromechanische Schnittstelle.

6. Token (100) gemäß einem der Ansprüche 1 bis 5, aufweisend zumindest eines der folgenden Merkmale:
wobei der Token (100) ausgebildet ist, bei mechanischem Koppeln der mechanischen Kopplungseinrichtung (110) mit einem Handwerkergerät (102) eine Kommunikationsverbindung, insbesondere eine kontaktlose oder kontaktbehaftete Kommunikationsverbindung, mit dem Handwerkergerät (102) auszubilden;
wobei der Token (100) mindestens einen Sensor (112) aufweist, insbesondere ausgewählt aus einer Gruppe bestehend aus einem Benutzeridentifizierungssensor, einem Gyrosensor, einem Ortsbestimmungssensor, einem Temperatursensor, einem Schalldrucksensor, einem Vibrationssensor, einem Beschleunigungssensor, einem Lagesensor, einem Stromsensor, einem Spannungssensor, und einem Sensor zum Messen eines elektrischen und/oder magnetischen Feldes;
wobei der Token (100) mindestens eine Kommunikationsantenne (114) aufweist, insbesondere ausgewählt aus einer Gruppe bestehend aus einer GPS-Antenne, einer BLE-Antenne, einer Ultrabreitband-Antenne, einer Bluetooth-Antenne, einer WLAN-Antenne, und einer Narrowband Internet of Things-Antenne;
wobei der Prozessor (106) aus einer Gruppe ausgewählt ist, die besteht aus einem Bluetooth-Prozessor, einem Narrowband Internet of Things-Prozessor, einem LTE-Prozessor, einem 5G-Prozessor und einem NFC-Prozessor;
wobei der Token (100) eine Energieversorgungseinrichtung (116) aufweist.

7. Token (100) gemäß einem der Ansprüche 1 bis 6, wobei der Token (100) eine Kommunikationseinrichtung (118) aufweist, die zum Kommunizieren mittels eines Kommunikationsnetzwerks (120) ausgebildet ist, insbesondere zum kryptografischen Kommunizieren unter Einsatz der Kryptographieeinheit (108).

8. Token (100) gemäß Anspruch 7, aufweisend zumindest eines der folgenden Merkmale:
wobei der Token (100) ausgebildet ist, mittels der Kommunikationseinrichtung (118) mit mindestens einem kommunizierfähig gekoppelten Knoten des Kommunikationsnetzwerks (120) zu kommunizieren, der aus einer Gruppe ausgewählt ist, die besteht aus einem anderen Token (100), einem portablen Benutzerendgerät (122) mit einer darauf gespeicherten App, einer zentralen Steuereinrichtung (124), und einer Nachbestelleinrichtung (126) zum Nachbestellen von Verbrauchsgütern zum Betrieb eines Handwerkergeräts (102);
wobei der Token (100) ausgebildet ist, mittels der Kommunikationseinrichtung (118) von einem kommunizierfähig gekoppelten Knoten des Kommunikationsnetzwerks (120) einen Datensatz herunterzuladen, insbesondere einen einen Betriebsablauf des Handwerkergeräts (102) definierenden Datensatz und/oder einen ein Benutzerprofil, insbesondere ein Berechtigungsprofil, eines Benutzers des Token (100) definierenden Datensatz;
wobei der Token (100) ausgebildet ist, mittels der Kommunikationseinrichtung (118) zu einem kommunizierfähig gekoppelten Knoten des Kommunikationsnetzwerks (120) einen Datensatz heraufzuladen, insbesondere einen Betriebsergebnisse und/oder Betriebsparameter eines Betriebs des Handwerkergeräts (102) angebenden Datensatz.

9. Token (100) gemäß einem der Ansprüche 1 bis 8, wobei der Prozessor (106) ausgebildet ist, den Betrieb des mit dem Token (100) gekoppelten Handwerkergeräts (102) in Einklang mit einem Benutzerprofil, insbesondere in Einklang mit einem Benutzerberechtigungsprofil, des Benutzers des Token (100) zu steuern.

10. Token (100) gemäß Anspruch 9, aufweisend zumindest eines der folgenden Merkmale:
aufweisend eine Speichereinrichtung (128), in der das Benutzerprofil, insbesondere das Benutzerberechtigungsprofil, gespeichert ist;
wobei der Prozessor (106) ausgebildet ist, den Betrieb des mit dem Token (100) gekoppelten Handwerkergeräts (102) nur dann freizugeben, wenn eine mittels des Token (100) vorab durchgeführte Benutzeridentifizierung zu dem Ergebnis geführt hat, dass ein sich identifizierender Benutzer für den Betrieb des Handwerkergeräts (102) berechtigt ist.

11. Token-Anordnung (130), aufweisend eine Mehrzahl von Token (100) gemäß einem der Ansprüche 1 bis 10, wobei unterschiedliche der Token (100) unterschiedliche Grade an Funktionalität aufweisen.

12. Token-Anordnung (130) gemäß Anspruch 11, aufweisend zumindest eines der folgenden Merkmale:
wobei Token (100) unterschiedlicher Grade an Funktionalität Sensoren (112) unterschiedlicher Grade an Funktionalität aufweisen;
wobei Token (100) unterschiedlicher Grade an Funktionalität Prozessoren (106) unterschiedlicher Grade an Funktionalität aufweisen;
wobei Token (100) unterschiedlicher Grade an Funktionalität Kommunikationsantennen (114) unterschiedlicher Grade an Funktionalität aufweisen.

13. Handwerkerausstattung (104), aufweisend:
einen Token (100) gemäß einem der Ansprüche 1 bis 10; und
eine Mehrzahl von Handwerkergeräten (102), von denen zumindest einige eine mechanische Aufnahmeeinrichtung (152) zum mechanischen Koppeln mit der mechanischen Kopplungseinrichtung (110) des Token (100) aufweisen;
wobei der Token (100) zum benutzerbezogenen Datenaustausch mit, insbesondere Steuern von, demjenigen der Handwerkergeräte (102) ausgebildet ist, mit dessen mechanischer Aufnahmeeinrichtung (152) die mechanische Kopplungseinrichtung (110) des Token (100) mechanisch gekoppelt ist.

14. Handwerkerausstattung (104) gemäß Anspruch 13, aufweisend zumindest eines der folgenden Merkmale:
wobei die Handwerkergeräte (102) mindestens zwei unterschiedliche Elemente aus einer Gruppe ausweisen, die besteht aus einem elektrischen Handgerät, einem Werkzeug oder einem Werkzeugsatz, einem Bevorratungssystem, einem Verbrauchsgut, und einem Fahrzeug;
wobei zumindest eines der Handwerkergeräte (102) als ein elektrisches Handgerät ausgebildet ist, insbesondere aus einer Gruppe, die besteht aus einer Bohrmaschine, einem Akkuschrauber, einem Akku-Bohrschrauber, einem Drehschrauber, einem Impulsschrauber, einem Ratschenschrauber, einem Schlagschrauber, insbesondere einem Akku-Schlagschrauber, einem Hammerbohrer, einem kabelgebundenen Handgerät und einem druckluftbetriebenen Handgerät.

15. Verfahren zum Betreiben von Handwerkergeräten (102) einer Handwerkerausstattung (104) mittels eines Token (100) gemäß einem der Ansprüche 1 bis 10, wobei das Verfahren aufweist:
mechanisches Koppeln der mechanischen Kopplungseinrichtung (110) des Token (100) mit einer mechanischen Aufnahmeeinrichtung (152) von einem ausgewählten der Handwerkergeräte (102); und
nach erfolgtem mechanischen Koppeln, Austauschen von Daten mit dem besagten Handwerkergerät (102), und insbesondere Steuern des Handwerkergeräts (102), mittels des Prozessors (106).

## Claims

1. A token (100) for craft devices (102) of craft equipment (104), the token (100) comprising:
a processor (106); and
a mechanical coupling device (110),
**characterized by**
a cryptography unit (108) configured to cryptographically communicate the token (100) by encrypting and/or decrypting signals;
wherein the processor (106) is configured to interact, in particular in terms of control technology, with different craft devices (102) of the craft equipment (104);
wherein the mechanical coupling device (110) is configured to mechanically couple with different craft devices (102) of the craft equipment (104); and
wherein the token (100) is configured, upon mechanical coupling of the mechanical coupling device (110) with a craft device (102), to exchange data with said craft device (102) by means of the processor (106), and in particular to control said craft device (102).

2. The token (100) according to claim 1, wherein the token (100) is configured as a plug-in element for insertion into a receiving opening of a craft device (102).

3. The token (100) according to claim 1 or 2, comprising one of the following features:
wherein the token (100) is configured as a disc, in particular as a circular disc, with a diameter in a range of 1 cm to 10 cm, in particular in a range of 2 cm to 5 cm;
wherein the token (100) is configured as a cuboid with an edge length in a range of 1 cm to 10 cm, in particular in a range of 2 cm to 5 cm.

4. The token (100) according to one of claims 1 to 3, wherein the mechanical coupling device (110) is configured to couple the token (100) detachably from the craft device (102).

5. The token (100) according to one of claims 1 to 4, wherein the mechanical coupling device (110) comprises an electromechanical interface, in particular an electromechanical interface that is universal for different craft devices (102).

6. The token (100) according to one of claims 1 to 5, comprising at least one of the following features:
wherein the token (100) is configured, upon mechanical coupling of the mechanical coupling device (110) with a craft device (102), to form a communication connection, in particular a contactless or contact-type communication connection, with the craft device (102);
wherein the token (100) comprises at least one sensor (112), in particular selected from a group consisting of a user identification sensor, a gyro sensor, a location determination sensor, a temperature sensor, a sound pressure sensor, a vibration sensor, an acceleration sensor, a position sensor, a current sensor, a voltage sensor, and a sensor for measuring an electrical and/or magnetic field;
wherein the token (100) comprises at least one communication antenna (114), in particular selected from a group consisting of a GPS antenna, a BLE antenna, an ultra-wideband antenna, a Bluetooth antenna, a WLAN antenna, and a narrowband Internet of Things antenna;
wherein the processor (106) is selected from a group consisting of a Bluetooth processor, a narrowband Internet of Things processor, an LTE processor, a 5G processor, and an NFC processor;
wherein the token (100) comprises a power supply device (116).

7. The token (100) according to one of claims 1 to 6, wherein the token (100) comprises a communication device (118) configured to communicate by means of a communication network (120), in particular for cryptographically communicating using the cryptography unit (108).

8. The token (100) according to claim 7, comprising at least one of the following features:
wherein the token (100) is configured to communicate by means of the communication device (118) with at least one communicably coupled node of the communication network (120), which is selected from a group consisting of another token (100), a portable user terminal (122) with an app stored thereon, a central control device (124), and a reordering device (126) for reordering consumer goods for operating a craft device (102);
wherein the token (100) is configured to download a data record from a communicably coupled node of the communication network (120) by means of the communication device (118), in particular a data record defining an operating sequence of the craft device (102) and/or a data record defining a user profile, in particular an authorization profile, of a user of the token (100);
wherein the token (100) is configured to upload a data record to a communicably coupled node of the communication network (120) by means of the communication device (118), in particular a data record indicating operating results and/or operating parameters of an operation of the craft device (102).

9. The token (100) according to one of claims 1 to 8, wherein the processor (106) is configured to control the operation of the craft device (102) coupled with the token (100) in accordance with a user profile, in particular in accordance with a user authorization profile, of the user of the token (100).

10. The token (100) according to claim 9, comprising at least one of the following features:
comprising a storage device (128) in which the user profile, in particular the user authorization profile, is stored;
wherein the processor (106) is configured to enable the operation of the craft device (102) coupled with the token (100) only if a user identification carried out in advance by means of the token (100) has led to the result that an identifying user is authorized for the operation of the craft device (102).

11. A token arrangement (130) comprising a plurality of tokens (100) according to one of claims 1 to 10, wherein different ones of the tokens (100) have different degrees of functionality.

12. The token arrangement (130) according to claim 11, comprising at least one of the following features:
wherein tokens (100) of different degrees of functionality comprise sensors (112) of different degrees of functionality;
wherein tokens (100) of different degrees of functionality comprise processors (106) of different degrees of functionality;
wherein tokens (100) of different degrees of functionality comprise communication antennas (114) of different degrees of functionality.

13. A craft equipment (104), comprising:
a token (100) according to one of claims 1 to 10; and
a plurality of craft devices (102), at least some of which comprise a mechanical receiving device (152) for mechanically coupling with the mechanical coupling device (110) of the token (100);
wherein the token (100) is configured for user-related data exchange with, in particular control of, that of the craft devices (102) with the mechanical receiving device (152) of which the mechanical coupling device (110) of the token (100) is mechanically coupled.

14. The craft equipment (104) according to claim 13, comprising at least one of the following features:
wherein the craft devices (102) comprise at least two different elements from a group consisting of an electrical handheld device, a tool or a tool set, a storage system, a consumable good, and a vehicle;
wherein at least one of the craft devices (102) is configured as an electrical handheld device, in particular from a group consisting of a drilling machine, a cordless screwdriver, a cordless drill screwdriver, a rotary screwdriver, a pulse screwdriver, a ratchet screwdriver, an impact screwdriver, in particular a cordless impact screwdriver, a hammer drill, a cable-bound handheld device, and a compressed-air-operated handheld device.

15. A method for operating craft devices (102) of craft equipment (104) by means of a token (100) according to one of claims 1 to 10, the method com prising:
mechanically coupling the mechanical coupling device (110) of the token (100) with a mechanical receiving device (152) of a selected one of the craft devices (102); and
after mechanical coupling has taken place, exchanging data with said craft device (102), and in particular controlling the craft device (102), by means of the processor (106).

## Revendications

1. Jeton (100) pour des appareils d'outillage (102) d'un équipement d'outillage (104), dans lequel le jeton (100) présente :
un processeur (106) ; et
un dispositif de couplage mécanique (110), **caractérisé par**
une unité cryptographique (108) destinée à une communication cryptographique du jeton (100), qui crypte et/ou décrypte des signaux ;
dans lequel le processeur (106) est conçu pour interagir, en particulier en matière de commande, avec différents appareils d'outillage (102) de l'équipement d'outillage (104) ;
dans lequel le dispositif de couplage mécanique (110) est conçu pour un couplage mécanique avec différents appareils d'outillage (102) de l'équipement d'outillage (104) ; et
dans lequel le jeton (100) est conçu pour échanger des données avec ledit appareil d'outillage (102) à l'aide du processeur (106) lors du couplage mécanique du dispositif de couplage mécanique (110) avec un appareil d'outillage (102), et en particulier pour commander ledit appareil d'outillage (102).

2. Jeton (100) selon la revendication 1, dans lequel le jeton (100) est réalisé sous la forme d'un élément enfichable à insérer dans une ouverture de réception d'un appareil d'outillage (102).

3. Jeton (100) selon la revendication 1 ou 2, présentant une des caractéristiques ci-dessous :
le jeton (100) est réalisé sous la forme d'un disque, en particulier d'un disque circulaire, avec un diamètre situé dans une plage comprise entre 1 cm et 10 cm, en particulier dans une plage comprise entre 2 cm et 5 cm ;
le jeton (100) est réalisé sous la forme d'un parallélépipède avec une longueur de bord située dans une plage comprise entre 1 cm et 10 cm, en particulier dans une plage comprise entre 2 cm et 5 cm.

4. Jeton (100) selon l'une quelconque des revendications 1 à 3, dans lequel le dispositif de couplage mécanique (110) est conçu pour coupler le jeton (100) de manière à pouvoir le retirer de l'appareil d'outillage (102).

5. Jeton (100) selon l'une quelconque des revendications 1 à 4, dans lequel le dispositif de couplage mécanique (110) présente une interface électromécanique, en particulier une interface électromécanique universelle destinée à différents appareils d'outillage (102).

6. Jeton (100) selon l'une quelconque des revendications 1 à 5, présentant au moins une des caractéristiques ci-dessous :
le jeton (100) est conçu pour former une liaison de communication, en particulier une liaison de communication sans contact ou avec contact, avec l'appareil d'outillage (102) lors du couplage mécanique du dispositif de couplage mécanique (110) avec un appareil d'outillage (102) ;
le jeton (100) présente au moins un capteur (112), en particulier choisi dans le groupe constitué d'un capteur d'identification d'utilisateur, d'un capteur gyroscopique, d'un capteur de localisation, d'un capteur de température, d'un capteur de pression acoustique, d'un capteur de vibrations, d'un capteur d'accélération, d'un capteur de position, d'un capteur de courant, d'un capteur de tension, et d'un capteur permettant de mesurer un champ électrique et/ou magnétique ;
le jeton (100) présente au moins une antenne de communication (114), en particulier choisie dans un groupe constitué d'une antenne GPS, d'une antenne BLE, d'une antenne à bande ultra-large, d'une antenne Bluetooth, d'une antenne WLAN, et d'une antenne de l'Internet des objets à bande étroite ;
le processeur (106) est sélectionné dans un groupe constitué d'un processeur Bluetooth, d'un processeur de l'Internet des objets à bande étroite, d'un processeur LTE, d'un processeur 5G et d'un processeur NFC ;
le jeton (100) présente un dispositif d'alimentation en énergie (116).

7. Jeton (100) selon l'une quelconque des revendications 1 à 6, dans lequel le jeton (100) présente un dispositif de communication (118) conçu pour communiquer au moyen d'un réseau de communication (120), en particulier pour communiquer de manière cryptographique en utilisant l'unité de cryptographie (108).

8. Jeton (100) selon la revendication 7, présentant au moins une des caractéristiques ci-dessous :
le jeton (100) est conçu pour communiquer au moyen du dispositif de communication (118) avec au moins un noeud du réseau de communication (120), ledit noeud étant couplé de manière à pouvoir communiquer et étant sélectionné dans un groupe constitué d'un autre jeton (100), d'un terminal utilisateur portable (122) sur lequel est stockée une application, d'un dispositif de commande central (124) et d'un dispositif de réassort (126) permettant de commander à nouveau des biens de consommation afin de faire fonctionner un appareil d'outillage (102) ;
le jeton (100) est conçu pour télécharger, à l'aide du dispositif de communication (118) et à partir d'un noeud, couplé de manière à pouvoir communiquer, du réseau de communication (120), un jeu de données, en particulier un jeu de données définissant le déroulement du fonctionnement de l'appareil d'outillage (102) et/ou un jeu de données définissant un profil d'utilisateur, en particulier un profil d'autorisation, d'un utilisateur du jeton (100) ;
le jeton (100) est conçu pour télécharger un jeu de données, en particulier un jeu de données indiquant des résultats de fonctionnement et/ou des paramètres de fonctionnement d'un fonctionnement de l'appareil d'outillage (102) au moyen du dispositif de communication (118) vers un noeud, couplé manière à pouvoir communiquer, du réseau de communication (120).

9. Jeton (100) selon l'une quelconque des revendications 1 à 8, dans lequel le processeur (106) est conçu pour commander le fonctionnement de l'appareil d'outillage (102) couplé au jeton (100) conformément à un profil d'utilisateur, en particulier conformément à un profil d'autorisation d'utilisateur, de l'utilisateur du jeton (100).

10. Jeton (100) selon la revendication 9, présentant au moins une des caractéristiques ci-dessous :
présente un dispositif de stockage (128) dans lequel est stocké le profil d'utilisateur, en particulier le profil d'autorisation d'utilisateur ;
le processeur (106) est conçu pour autoriser le fonctionnement de l'appareil d'outillage (102) couplé au jeton (100) uniquement si une identification d'utilisateur effectuée à l'avance au moyen du jeton (100) a conduit à la conclusion que l'utilisateur en train de s'identifier est autorisé à utiliser l'appareil d'outillage (102).

11. Groupe de jetons (130), présentant une pluralité de jetons (100) selon l'une quelconque des revendications 1 à 10, dans lequel différents jetons (100) présentent différents degrés de fonctionnalité.

12. Groupe de jetons (130) selon la revendication 11, présentant au moins une des caractéristiques ci-dessous :
des jetons (100) de différents degrés de fonctionnalité présentent des capteurs (112) de différents degrés de fonctionnalité ;
des jetons (100) de différents degrés de fonctionnalité présentent des processeurs (106) de différents degrés de fonctionnalité ;
des jetons (100) de différents degrés de fonctionnalité présentent des antennes de communication (114) de différents degrés de fonctionnalité.

13. Equipement d'outillage (104), présentant :
un jeton (100) selon l'une quelconque des revendications 1 à 10 ; et
une pluralité d'appareils d'outillage (102), dont au moins certains présentent un dispositif de réception mécanique (152) permettant un couplage mécanique avec le dispositif de couplage mécanique (110) du jeton (100) ;
dans lequel le jeton (100) est conçu pour échanger des données liées à l'utilisateur avec, en particulier pour commander, celui des appareils d'outillage (102) dont le dispositif de réception mécanique (152) est couplé mécaniquement avec le dispositif de couplage mécanique (110) du jeton (100).

14. Equipement d'outillage (104) selon la revendication 13, présentant au moins une des caractéristiques ci-dessous :
les appareils d'outillage (102) présentent au moins deux éléments distincts issus d'un groupe constitué d'un appareil à main électrique, d'un outil ou d'un jeu d'outils, d'un système de stockage, d'un bien de consommation, et d'un véhicule ;
au moins un des appareils d'outillage (102) est réalisé sous la forme d'un appareil à main électrique, en particulier issu d'un groupe constitué d'une perceuse, d'une visseuse sans fil, d'une perceuse-visseuse sans fil, d'une visseuse électrique, d'une visseuse à impulsions, d'une visseuse à cliquet, d'une visseuse à chocs, en particulier d'une visseuse à chocs sans fil, d'une perceuse à percussion, d'un appareil d'outillage câblé et d'un appareil d'outillage pneumatique.

15. Procédé de fonctionnement d'un appareil d'outillage (102) d'un équipement d'outillage (104) au moyen d'un jeton (100) selon l'une quelconque des revendications 1 à 10, dans lequel le procédé comprend les étapes consistant à :
coupler de manière mécanique le dispositif de couplage mécanique (110) du jeton (100) avec un dispositif de réception mécanique (152) d'un appareil d'outillage (102) sélectionné ; et
après le couplage mécanique, échanger des données avec ledit appareil d'outillage (102), et en particulier commander l'appareil d'outillage (102), à l'aide du processeur (106).
